(19) **Europäisches Patentamt**
**European Patent Office**
**Office européen des brevets**

(11) **EP 4 553 483 A1**

(12) **EUROPEAN PATENT APPLICATION**
published in accordance with Art. 153(4) EPC

(43) Date of publication:
**14.05.2025 Bulletin 2025/20**

(21) Application number: **23857225.9**

(22) Date of filing: **10.08.2023**

(51) International Patent Classification (IPC):
$G01N\ 3/08^{(2006.01)}$    $B21D\ 22/00^{(2006.01)}$
$G01N\ 3/32^{(2006.01)}$    $G06F\ 30/23^{(2020.01)}$
$G06F\ 113/22^{(2020.01)}$    $G06F\ 119/14^{(2020.01)}$

(52) Cooperative Patent Classification (CPC):
**B21D 22/00; G01N 3/08; G01N 3/32; G06F 30/23;**
**G06F 2113/22; G06F 2119/14**

(86) International application number:
**PCT/JP2023/029208**

(87) International publication number:
**WO 2024/043112 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.08.2022 JP 2022132986**
**09.06.2023 JP 2023095251**

(71) Applicant: **JFE Steel Corporation**
**Tokyo 100-0011 (JP)**

(72) Inventors:
• **TAMASHIRO, Fumiaki**
  **Tokyo 100-0011 (JP)**
• **ISHIWATARI, Akinobu**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **STRESS-STRAIN RELATIONSHIP INFERENCE METHOD AND SPRINGBACK PREDICTION METHOD, AND PRESS FORMED ARTICLE MANUFACTURING METHOD**

(57)     A stress-strain relation estimation method according to the present invention defines a conversion parameter obtained by converting a parameter of a Yoshida-Uemori material model, uses, as an objective function, a weighted residual square sum obtained by multiplying each of a residual between an experimental value and a calculated value of a stress-strain curve under a uniaxial tensile stress, a residual between an experimental value and a calculated value of a stress-strain curve under a tension-compression cyclic stress, and a residual between an experimental value and a calculated value of a mechanical property value of a metal sheet by an individual weighting factor, and decides the conversion parameter and the parameter so as to minimize the objective function under constraint conditions regarding possible ranges of the conversion parameter and other parameter.

EP 4 553 483 A1

# FIG.1

```
                    ┌─────────────────┐
                    │      START      │
                    └────────┬────────┘
                             ▼
```

**UNIAXIAL TENSILE STRESS-STRAIN CURVE ACQUISITION STEP**
ACQUIRE EXPERIMENTAL VALUE OF STRESS-STRAIN RELATION BY
UNIAXIAL TENSILE TEST
(UNIAXIAL TENSILE STRESS-STRAIN RELATION) ～S1

**CYCLIC STRESS-STRAIN CURVE ACQUISITION STEP**
ACQUIRE EXPERIMENTAL VALUE OF STRESS-STRAIN RELATION BY
TENSION-COMPRESSION CYCLIC LOADING TEST
(CYCLIC STRESS-STRAIN RELATION) ～S3

**EXPERIMENTAL VALUE OF MECHANICAL PROPERTY
VALUE CALCULATION STEP**
CALCULATE EXPERIMENTAL VALUE OF MECHANICAL PROPERTY VALUE
FROM UNIAXIAL TENSILE STRESS-STRAIN RELATION ～S5

**CONVERSION PARAMETER DEFINITION STEP**
DEFINE CONVERSION PARAMETER OBTAINED BY
CONVERTING PARAMETER OF YOSHIDA-UEMORI MATERIAL MODEL ～S7

**CONSTRAINT CONDITION SETTING STEP**
LIMIT POSSIBLE RANGE (CONSTRAINT CONDITION) OF
CONVERSION PARAMETER AND OTHER PARAMETER OF YOSHIDA-UEMORI
MATERIAL MODEL USING MECHANICAL PROPERTY VALUE ～S9

**OBJECTIVE FUNCTION SETTING STEP**
FOR EACH OF TENSILE STRESS-STRAIN CURVE,
CYCLIC STRESS-STRAIN CURVE, AND MECHANICAL PROPERTY VALUE,
CALCULATE RESIDUAL BETWEEN EXPERIMENTAL VALUE AND
CALCULATED VALUE CALCULATED FROM
YOSHIDA-UEMORI MATERIAL MODEL, AND SET, AS OBJECTIVE FUNCTION,
WEIGHTED RESIDUAL SQUARE SUM OBTAINED BY
MULTIPLYING EACH RESIDUAL BY WEIGHT ～S11

**PARAMETER DECISION STEP**
DECIDE CONVERSION PARAMETER AND
OTHER PARAMETER SO AS TO SATISFY MINIMIZATION OF
OBJECT FUNCTION UNDER CONSTRAINT CONDITION ～S13

**STRESS-STRAIN RELATION ESTIMATION STEP**
ESTIMATE STRESS-STRAIN RELATION USING DECIDED
CONVERSION PARAMETER AND OTHER PARAMETER ～S15

```
                    ┌─────────────────┐
                    │       END       │
                    └─────────────────┘
```

**Description**

Field

The present invention relates to a stress-strain relation estimation method for estimating a relation between a stress and a strain of a metal sheet using a Yoshida-Uemori material model representing the Bauschinger effect of a metal sheet. The present invention further relates to a spring-back prediction method for predicting a springback of a press formed part using a stress-strain relation estimated by a stress-strain relation estimation method. The present invention also relates to a method for manufacturing a press formed part, in which a press forming condition is adjusted so as to reduce a springback of a press formed part on the basis of a result of prediction of a springback thereof to thereby manufacture a press formed part with improved dimensional accuracy.

Background

In press forming (e.g., press forming of an automotive part), defects of press forming such as fracture, wrinkles, and a shape failure due to a springback deteriorates productivity, and leads to an increase in $CO_2$ emission amount with an increase in production time. In recent years, reduction of $CO_2$ emissions from automobiles has also been promoted by weight reduction of automotive bodies. While high strength and thinning of body frame parts and the like are essential for weight reduction of automotive bodies, a frequency of occurrence of defects of press forming during press forming of frame parts and the like tends to increase accordingly. For this reason, preliminary prediction of and countermeasures for defects of press forming during the press forming can shorten a production time by reducing a press forming defect occurrence rate, which contributes to the reduction of $CO_2$ emission.

Numerical analysis (finite element analysis) by a finite element method in a press forming process is widely used to predict a defect of press forming during press forming. In finite element analysis, material models enabling deformation properties of a steel sheet (blank) of a press formed part to be reproduced with high accuracy have been developed. As a result, it is possible to numerically model an actual phenomenon in a press forming process, making it possible to predict a defect of press forming of a press formed part in advance by computer calculation without performing actual press forming.

In general, in press forming of a material having higher strength, since a spring-back amount after press forming and die release from a press forming die increases, it is important to use a material model enabling accurate reproduction of a springback. As such a material model, the Yoshida-Uemori material model representing the Bauschinger effect of metal sheets has been increasingly used. The Bauschinger effect is a phenomenon in which when a load direction of a stress is reversed, reyielding occurs earlier than an absolute value of the stress before the reversal, and it is said that this phenomenon can be reproduced with high accuracy by the Yoshida-Uemori material model.

The Yoshida-Uemori material model has eight parameters, and these parameters are decided so as to reproduce a stress-strain relation measured by a uniaxial tensile test or a tension-compression cyclic loading test using a blank of a press formed part. On the other hand, the number of parameters of an isotropic hardening model, which is a material model conventionally widely used, is as small as two in the n-power-law hardening rule, and as small as three in both the Swift hardening rule and the Voce hardening rule. Therefore, it was relatively easy to decide the parameters of the isotropic hardening model. However, as described above, the Yoshida-Uemori material model has eight parameters, and it is not easy to find an optimal combination of the eight parameters.

As an example of a method for deciding a plurality of parameters in a material model such as the Yoshida-Uemori material model, Patent Literature 1 discloses a method in which some of the plurality of parameters are identified first, and then parameters including the remaining parameters are identified using the identification result. Furthermore, Patent Literature 1 also discloses a method in which when a new parameter is added, parameters other than the added parameter are identified first, and thereafter, parameters including the added parameter are identified using the identification result. Then, according to the method disclosed in Patent Literature 1, convergence of parameter identification calculation can be improved as compared with a case where identification of all parameters is simultaneously performed using preset initial values of parameters. Moreover, it is said that accuracy of simulation of a stress-strain relation is improved by using the parameters identified by this method.

Citation List

Patent Literature

Patent Literature 1: JP 2008-142774 A

Summary

Technical Problem

In the method disclosed in Patent Literature 1, since parameters are decided while parameters to be identified are gradually added, it is necessary to repeat, a plurality of times, optimization calculation such as minimization of residuals necessary for deciding all the parameters. Therefore, there is a problem that the number of steps required for calculation increases as compared with a method of simultaneously identifying a plurality of parameters of a material model.

The present invention has been made to solve the above problems, and an object of the present invention is to provide a stress-strain relation estimation method enabling parameters of the Yoshida-Uemori material model to be appropriately decided without requiring many steps and enabling a stress-strain relation of a metal sheet to be accurately estimated. Another object of the present invention is to provide a spring-back prediction method enabling accurate prediction of a springback of a press formed part by performing press forming analysis and spring-back analysis using a stress-strain relation estimated by the above method. A further object of the present invention is to provide a method for manufacturing a press formed part in which press forming conditions are decided so that a springback of a press formed part predicted by the above method is suppressed, and the press formed part is manufactured under the decided press forming conditions.

Solution to Problem

A stress-strain relation estimation method according to the present invention estimates a relation between a stress and a strain of a metal sheet by using a Yoshida-Uemori material model representing a Bauschinger effect of the metal sheet, and includes: a uniaxial tensile stress-strain curve acquisition step of experimentally acquiring a stress-strain curve under a uniaxial tensile stress of the metal sheet by a uniaxial tensile test using the metal sheet as a test piece; a cyclic stress-strain curve acquisition step of experimentally acquiring a stress-strain curve under a tension-compression cyclic stress of the metal sheet by a tension-compression cyclic loading test using the metal sheet as a test piece; an experimental value of mechanical property value calculation step of calculating an experimental value of a mechanical property value of the metal sheet from the stress-strain curve under the uniaxial tensile stress of the metal sheet experimentally acquired by the uniaxial tensile test, the mechanical property value being a yield stress, a tensile strength, a uniform elongation, and a stress in a high strain range equal to or higher than the uniform elongation; a conversion parameter definition step of defining a conversion parameter obtained by combining and converting at least two parameters among parameters for use in the Yoshida-Uemori material model; a constraint condition setting step of setting a constraint condition that limits a possible range of the conversion parameter using the calculated experimental value of the mechanical property value; an objective function setting step of calculating a residual between the stress-strain curve under the uniaxial tensile stress experimentally acquired and a stress-strain curve under the uniaxial tensile stress calculated by the Yoshida-Uemori material model, a residual between the stress-strain curve under the tension-compression cyclic stress experimentally acquired and a stress-strain curve under the tension-compression cyclic stress calculated by the Yoshida-Uemori material model, and a residual between the experimental value of the mechanical property value of the metal sheet and a calculated value of the mechanical property value calculated by the Yoshida-Uemori material model, and setting a weighted residual square sum obtained by multiplying each calculated residual by an individual weighting factor as an objective function; and a parameter decision step of deciding the conversion parameter and other parameter of the Yoshida-Uemori material model so as to minimize the objective function under the constraint condition.

In the conversion parameter definition step, one or more conversion parameters given by the following Equations (1) to (4) obtained by combining at least two of the parameters of the Yoshida-Uemori material model may be defined, and in the constraint condition setting step, a possible range of the conversion parameter defined in the conversion parameter definition step may be limited by an Equation corresponding to the defined conversion parameter among Equations (5) to (8) below,

$$BL = Y + a_0 \qquad (1)$$

$$\kappa = C_1 / C_2 \qquad (2)$$

$$\eta = b / ( b + R_{sat} ) \qquad (3)$$

$$\sigma_{sat} = Y + a_0 + b + R_{sat} \qquad (4)$$

$$YS \leqq BL \leqq XS \qquad (5)$$

$$1 \leqq \kappa \leqq 4 \qquad (6)$$

$$0 \leqq \eta \leqq 1 \qquad (7)$$

$$0.9 \times XS \leqq \sigma_{sat} \leqq 1.1 \times XS \qquad (8)$$

In which,

BL, $\kappa$, $\eta$, $\sigma_{sat}$ : conversion parameter

Y, $a_0$, $C_1$, $C_2$, b, $R_{sat}$ : parameter of Yoshida - Uemori material model

YS: experimental value of yield stress

XS : experimental value of stress in high strain range

In the objective function setting step, the weighted residual square sum may be obtained by Equation (9) below,

$$WRSS = W_{YS}\left(\frac{YS_{cal} - YS_{exp}}{YS_{exp}}\right)^2 + W_{TS}\left(\frac{TS_{cal} - TS_{exp}}{TS_{exp}}\right)^2$$
$$+ W_{uEL}\left(\frac{uEL_{cal} - uEL_{exp}}{uEL_{exp}}\right)^2 + W_{XS}\left(\frac{XS_{cal} - XS_{exp}}{XS_{exp}}\right)^2$$
$$+ W_T \frac{1}{nn}\sum_{i=1}^{nn}\left(\frac{\sigma_{cal(i)}^T - \sigma_{exp(i)}^T}{TS_{exp}}\right)^2 + \sum_{k=1}^{p+1} W_{TCk}\frac{1}{mm}\sum_{j=1}^{mm}\left(\frac{\sigma_{cal(j)}^{TCk} - \sigma_{exp(j)}^{TCk}}{TS_{exp}}\right)^2 \qquad (9)$$

In which,
WRSS : weighted residual square sum
$YS_{exp}$ : experimental value of yield stress
$YS_{cal}$ : calculated value of yield stress using Yoshida-Uemori material model
$W_{YS}$ : weighting factor for residual of yield stress
$TS_{exp}$ : experimental value of tensile strength
$TS_{cal}$ : calculated value of tensile strength using Yoshida-Uemori material model
$W_{TS}$ : weighting factor for residual of tensile strength
$uEL_{exp}$ : experimental value of uniform elongation
$uEL_{cal}$ : calculated value of uniform elongation using Yoshida-Uemori material model
$W_{uEL}$ : weighting factor for residual of uniform elongation
$XS_{exp}$ : experimental value of stress in high strain range equal to or higher than uniform elongation
$XS_{cal}$ : calculated value of stress in high strain range equal to or higher than uniform elongation using Yoshida - Uemori material model
$W_{XS}$ : weighting factor for residual of stress in high strain range equal to or higher than uniform elongation

$\sigma_{exp(i)}^T$ : experimental value of stress with respect to arbitrary strain on stress - strain curve under uniaxial tensile stress

$\sigma_{cal(i)}^T$ : calculated value of stress with respect to arbitrary strain on stress - strain curve under uniaxial tensile stress using Yoshida - Uemori material model
$W_T$ : weighting factor for residual of stress under uniaxial tensile stress

$\sigma_{exp(j)}^{TCk}$ : experimental value of stress with respect to arbitrary strain on stress - strain curve under tension - compression cyclic stress

$\sigma_{cal(j)}^{TCk}$ : calculated value of stress with respect to arbitrary strain on stress - strain curve under tension - compression cyclic stress using Yoshida - Uemori material model

$W_{TCk}$ : weighting factor for residual of stress under tension - compression cyclic stress

A spring-back prediction method according to the present invention includes: estimating a stress-strain relation of a metal sheet by using a parameter and a conversion parameter of the Yoshida-Uemori material model decided by the stress-strain relation estimation method according to the present invention; and performing a press forming analysis and a spring-back analysis of a press formed part made of a plate material of the metal sheet using the estimated stress-strain relation, and predicting a spring-back of the press formed part.

A method according to the present invention for manufacturing a press formed part having improved dimensional accuracy by adjusting press forming conditions so as to reduce a spring-back amount includes: a test piece collection step of collecting a test piece from a metal sheet for use as a blank of the press formed part, the test piece being for use in each of the uniaxial tensile test in the uniaxial tensile stress-strain curve acquisition step and the tension-compression cyclic loading test in the cyclic stress-strain curve acquisition step of the stress-strain relation estimation method according to the present invention; a stress-strain relation estimation parameter acquisition step of obtaining the conversion parameter and that other parameter of the Yoshida-Uemori material model on the basis of the stress-strain relation estimation method according to the present invention using the collected test piece; a temporary press forming condition setting step of setting a temporary press forming condition of the press formed part; a spring-back amount prediction step of performing a press forming analysis and a spring-back analysis under the temporary press forming condition of the press formed part using the blank of the metal sheet by using a stress-strain relation estimated by the conversion parameter and that other parameter of the Yoshida-Uemori material model obtained in the stress-strain relation estimation parameter acquisition step, and predicting a spring-back amount of the press formed part; a spring-back amount determination step of determining whether or not the spring-back amount of the press formed part predicted in the spring-back amount prediction step is within a predetermined range set in advance; a temporary press forming condition changing step of changing the temporary press forming condition when it is determined, in the spring-back amount determination step, that the spring-back amount of the press formed part is out of the predetermined range set in advance; a repeating step of repeatedly executing the temporary press forming condition changing step, the spring-back amount prediction step, and the spring-back amount determination step until the spring-back amount of the press formed part is determined to be within the predetermined range set in advance in the spring-back amount determination step; an actual press forming condition deciding step of deciding, in a case where the spring-back amount of the press formed part is determined to be within the predetermined range in the spring-back amount determination step, the temporary press forming condition in that case as an actual press forming condition; and an actual press forming step of press-forming the press formed part using the blank of the metal sheet under the decided actual press forming condition. Advantageous Effects of Invention

According to the present invention, it is possible to easily and appropriately decide a parameter of the Yoshida-Uemori material model representing the Bauschinger effect of a metal sheet, and to accurately estimate a stress-strain relation of the metal sheet.

Furthermore, according to the present invention, it is possible to accurately predict a springback of a press formed part by performing press forming analysis and spring-back analysis of a press formed part using a stress-strain relation of a metal sheet estimated as described above.

In addition, according to the present invention, it is possible to manufacture a press formed part with improved dimensional accuracy by adjusting press forming conditions so as to reduce a spring-back amount. In particular, during mass production of actual press formed parts, since actual press forming conditions can be changed in accordance with variations in a metal sheet for use as a blank, it is also possible to suppress occurrence of a large amount of dimensional defects due to a springback of the press formed part. Then, it is also possible to greatly reduce a cost and a period of preparation for production of actual press formed parts.

Brief Description of Drawings

FIG. 1 is a flowchart illustrating a flow of processing of a stress-strain relation estimation method according to a first embodiment of the present invention.

FIG. 2 is a graph illustrating an example of a relation between a stress and a strain of a metal sheet that has been unloaded after tensile deformation and further subjected to compressive deformation.

FIG. 3 is a schematic diagram illustrating a Yoshida-Uemori material model that reproduces a kinematic hardening behavior of the metal sheet by movement and expansion of two surfaces, a yield surface and a bounding surface.

FIG. 4 is a graph schematically illustrating a stress-strain relation obtained by a uniaxial tensile test of the metal sheet.

FIG. 5 is a graph schematically illustrating a stress-strain relation obtained by a tension-compression cyclic loading test of the metal sheet.

FIG. 6 is a graph schematically illustrating possible ranges of conversion parameters in the stress-strain relation estimation method according to the first embodiment of the present invention.

FIG. 7 is a diagram for explaining a residual between an experimental value of a stress-strain curve and a calculated value according to the Yoshida-Uemori material model in the first embodiment of the present invention ((a) residual of a stress-strain curve under a uniaxial tensile stress, (b) residual of a stress-strain curve under a tension-compression cyclic stress).

FIG. 8 is a flowchart illustrating a flow of processing of a spring-back prediction method according to a second embodiment.

FIG. 9 is a graph illustrating a transition and a convergence point of an objective function used for optimization calculation by a genetic algorithm of a parameter of the Yoshida-Uemori material model in Example.

FIG. 10 is a graph illustrating a stress-strain relation under a uniaxial tensile stress estimated using the parameter of the Yoshida-Uemori material model decided in Example and a stress-strain relation under the uniaxial tensile stress experimentally acquired.

FIG. 11 is a graph illustrating a stress-strain relation under a tension-compression cyclic stress estimated using the parameter of the Yoshida-Uemori material model decided in Example, and a stress-strain relation under the tension-compression cyclic stress experimentally acquired.

FIG. 12 is a view for explaining a press formed part subjected to spring-back prediction and explaining a floating amount of a flange portion obtained as a spring-back amount of the press formed part in Example ((a) perspective view and (b) cross-sectional view).

FIG. 13 is a flowchart of a method for manufacturing a press formed part according to a third embodiment of the present invention.

FIG. 14 is a view for explaining an example of manufacturing a press formed part by draw-bending method press forming using a press forming die including a die, a punch, a pressure pad, and a blank holder in the method for manufacturing a press formed part according to the third embodiment of the present invention.

Description of Embodiments

Prior to description of first and second embodiments of the present invention, the principle of the Yoshida-Uemori material model for use in the present invention and the background leading to the present invention will be described.

<Principle of Yoshida-Uemori Material Model>

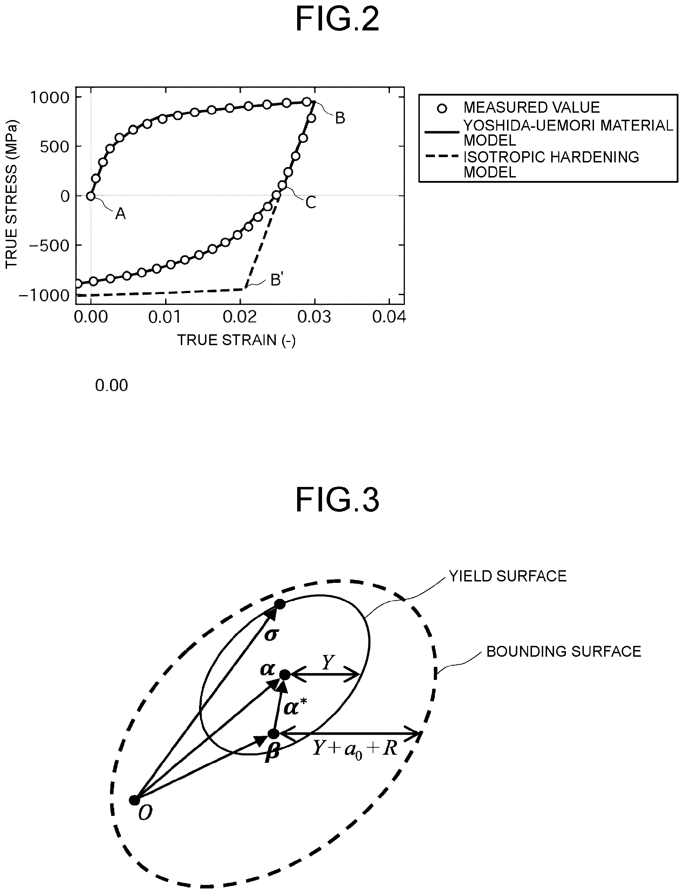

FIG. 2 illustrates a relation between a stress and a strain when a metal sheet is unloaded after tensile deformation and further subjected to compressive deformation. In a conventionally used isotropic hardening model, as indicated by a broken line in FIG. 2, deformation proceeds in a compression direction from an unloading start point B, and reyielding occurs at a point B'. By contrast, in an actual metal sheet, as indicated by a circle in FIG. 2, reyielding occurs in the vicinity of a point C which is considerably earlier than the point B'. Thus, a phenomenon of reyielding occurring earlier than an absolute value of a stress before reversal when a deformation direction of the metal sheet is reversed is called a Bauschinger effect.

It is necessary to reproduce the Bauschinger effect with high accuracy in order to predict a shape change, i.e., a springback, which occurs when a press formed part is taken out from a press forming die after press forming, with high accuracy. However, in the isotropic hardening model, as described above, the Bauschinger effect cannot be reproduced. Therefore, kinematic hardening models that reproduce the Bauschinger effect have been proposed. Among them, the Yoshida-Uemori material model enabling reproduction of the Bauschinger effect with high accuracy has started to be widely used in press forming analysis and the like. As indicated by a solid line in FIG. 2, it is apparent that the Yoshida-Uemori material model can accurately reproduce the Bauschinger effect of a metal sheet.

In addition, as illustrated in FIG. 3, the Yoshida-Uemori material model is a two-surface model having a yield surface and a bounding surface. Then, in the Yoshida-Uemori material model, the Bauschinger effect can be reproduced with high accuracy by appropriately defining hardening of these two surfaces. In the following, the principle of the Yoshida-Uemori material model will be described.

In the finite element analysis, a relation between a Jaumann stress rate $d\sigma J$ of a Cauchy stress $\sigma$ and a strain rate tensor D is expressed by Equation (A1). In Equation (A1), Cep represents a fourth rank tensor called an elastic-plastic tangent modulus tensor.

$$\mathrm{d}\boldsymbol{\sigma}^{J} = \mathbf{C}^{ep} : \mathbf{D} \qquad \cdots (A1)$$

Assuming that an outward normal direction of a yield surface coincides with a direction of an incremental plastic strain, i.e., assuming an associated flow rule, the elastic-plastic tangent modulus tensor Cep is expressed by the following Equation (A2) in the Yoshida-Uemori material model.

$$C^{ep} = C^e - \frac{\left(C^e : \frac{\partial f}{\partial \sigma}\right) \otimes \left(\frac{\partial f}{\partial \sigma} : C^e\right)}{\frac{\partial f}{\partial \sigma} \cdot \left[C\left\{\left(\frac{a}{Y}\right)(\sigma - \alpha) - \sqrt{\frac{a}{\alpha^*}}\alpha^*\right\} + m\left\{\left(\frac{b}{Y}\right)(\sigma - \alpha) - \beta\right\}\right] + \frac{\partial f}{\partial \sigma} : C^e : \frac{\partial f}{\partial \sigma}} \quad \dots (A2)$$

f represents a yield function and Ce represents an elastic tangent modulus tensor. In addition, a, b, C, m, $\alpha$, $\alpha^*$, and $\beta$ are defined as follows in the Yoshida-Uemori material model.

The Yoshida-Uemori material model is a two-surface model that reproduces a hardening behavior of a metal sheet by moving and expanding of the two surfaces, the yield surface and the bounding surface. The yield surface is a kinematic hardening type in which the surface moves as deformation progresses. By contrast, the bounding surface is a combined hardening type in which kinematic hardening and isotropic hardening in which the size of the surface itself reproduces hardening by enlargement are combined.

In FIG. 3 schematically illustrating a kinematic hardening property according to the Yoshida-Uemori material model, a yield surface has a center $\alpha$ and a radius Y, and a bounding surface has a center $\beta$ and a radius Y+a0+R. a0 represents a difference in initial radius between the yield surface and the bounding surface, and R represents an isotropic hardening amount of the bounding surface. Furthermore, a relative position of the center of the yield surface with respect to the center of the bounding surface is expressed as $\alpha^*$ (=$(\alpha-\beta)$).

In the Yoshida-Uemori material model, a moving rate d$\alpha^*$ at the relative position $\alpha^*$ of the center of the yield surface with respect to the center of the bounding surface is defined by Equation (A3), and a moving rate d$\beta$ at the center $\beta$ of the bounding surface is defined by Equation (A4). C represents a coefficient related to a kinematic hardening rate of the yield surface, a represents a difference between the radius of the yield surface and the radius of the bounding surface, m represents a coefficient representing a rate of the kinematic hardening and a rate of the isotropic hardening of the bounding surface, and b represents a maximum value of an amount of kinematic hardening of the bounding surface.

$$d\alpha^* = C\left\{\left(\frac{a}{Y}\right)(\sigma - \alpha) - \sqrt{\frac{a}{\alpha^*}}\alpha^*\right\}d\lambda \qquad \cdots (A3)$$

In which, $a = a_0 + R$, $\overline{a}^* = f(\alpha^*)$

$$d\beta = m\left\{\left(\frac{b}{Y}\right)(\sigma - \alpha) - \beta\right\}d\lambda \qquad \cdots (A4)$$

Furthermore, since the coefficient C related to the kinematic hardening rate of the yield surface in Equation (A3) takes different values at an initial stage of deformation and thereafter, the Yoshida-Uemori material model enables characteristics such as yielding stage behavior at the initial stage of deformation to be reproduced with high accuracy. In general, C is determined by an equivalent plastic strain amount $\varepsilon$peq as shown in the following Equation (A5).

$$C = \begin{cases} C_1 & \text{when } \varepsilon_{eq}^p < 0.005 \\ C_2 & \text{otherwise} \end{cases} \qquad \cdots (A5)$$

Kinematic hardening of the yield surface and kinematic hardening of the bounding surface are reproduced by the above Equations (A3) to (A5). On the other hand, the isotropic hardening amount R of the bounding surface is defined by Equation (A6). Rsat represents a maximum value of the isotropic hardening amount of the bounding surface, and m is a coefficient representing the kinematic hardening rate and the isotropic hardening rate of the bounding surface.

$$dR = m(R_{sat} - R)d\lambda \qquad \cdots (A6)$$

As described above, in the Yoshida-Uemori material model, a hardening behavior of the metal sheet is reproduced by the kinematic hardening of the yield surface (Equations (A3) and (A5)), the kinematic hardening of the bounding surface (Equation (A4)), and the isotropic hardening of the bounding surface (Equation (A6)). Then, it is necessary to accurately decide the parameters (Y, a0, C1, C2, b, m, Rsat) in Equations (A3) to (A6) in order to reproduce the Bauschinger effect with high accuracy.

Furthermore, in order to express a work hardening stagnation region after stress reversal, an anisotropic hardening region (center q, radius r) is defined by the following Equations (A7) to (A9) in the Yoshida-Uemori material model. Then, while the center $\beta$ of the bounding surface exists in an anisotropic hardening region (f($\beta$-q)<r is satisfied), the bounding surface is not supposed to be isotropically hardened (R=0). h is a parameter representing a ratio between an amount of expansion and an amount of movement of the anisotropic hardening region.

$$dq = \frac{(1 - h)\Gamma}{r}(\beta - q) \qquad \cdots (A7)$$

$$dr = \begin{cases} h\Gamma & \text{when } dR > 0 \\ 0 & \text{when } dR = 0 \end{cases} \qquad \cdots (A8)$$

$$\Gamma = \frac{\partial f}{\partial (\beta - q)} \cdot d\beta \qquad \cdots (A9)$$

From the foregoing, the stress-strain relation of the metal sheet is modeled in the Yoshida-Uemori material model. Table 1 summarizes the parameters of the Yoshida-Uemori material model.

Table 1

| Parameters | Meaning of parameters |
|---|---|
| Y | Radius of yield surface |
| $a_0$ | Difference in initial radius between yield surface and bounding surface |
| $C_1$ | Coefficient related to kinematic hardening rate of yield surface (initial stage of deformation) |
| $C_2$ | Coefficient related to kinematic hardening rate of yield surface (after initial stage of deformation) |
| b | Maximum value of amount of kinematic hardening of bounding surface |
| m | Coefficient representing rate of kinematic hardening and rate of isotropic hardening of bounding surface |
| $R_{sat}$ | Maximum value of amount of isotropic hardening of bounding surface |
| h | Ratio between amount of expansion and amount of movement of anisotropic hardening region |

<Background Leading to the Present Invention>

As a general isotropic hardening model, there are the Swift hardening rule, the Ludwik hardening rule, the Gosh hardening rule, the Voce hardening rule, the Hockett-Sheby hardening rule, and the like as expressed by the following Equations (A10) to (A14).

| Swift hardening rule | $\sigma_{eq} = c_1(c_2 + \varepsilon_{eq}^p)^{c_3}$ | $\cdots$ (A10) |
|---|---|---|
| Ludwik hardening rule | $\sigma_{eq} = c_1 + c_2(\varepsilon_{eq}^p)^{c_3}$ | $\cdots$ (A11) |
| Gosh hardening rule | $\sigma_{eq} = c_1 + c_2(c_3 + \varepsilon_{eq}^p)^{c_4}$ | $\cdots$ (A12) |
| Voce hardening rule | $\sigma_{eq} = c_1 + c_2 \exp(-c_3 \varepsilon_{eq}^p)$ | $\cdots$ (A13) |
| Hockett - Sherby hardening rule | $\sigma_{eq} = c_1 + c_2 \exp(-c_3 \varepsilon_{eq}^p)^{c_4}$ | $\cdots$ (A14) |

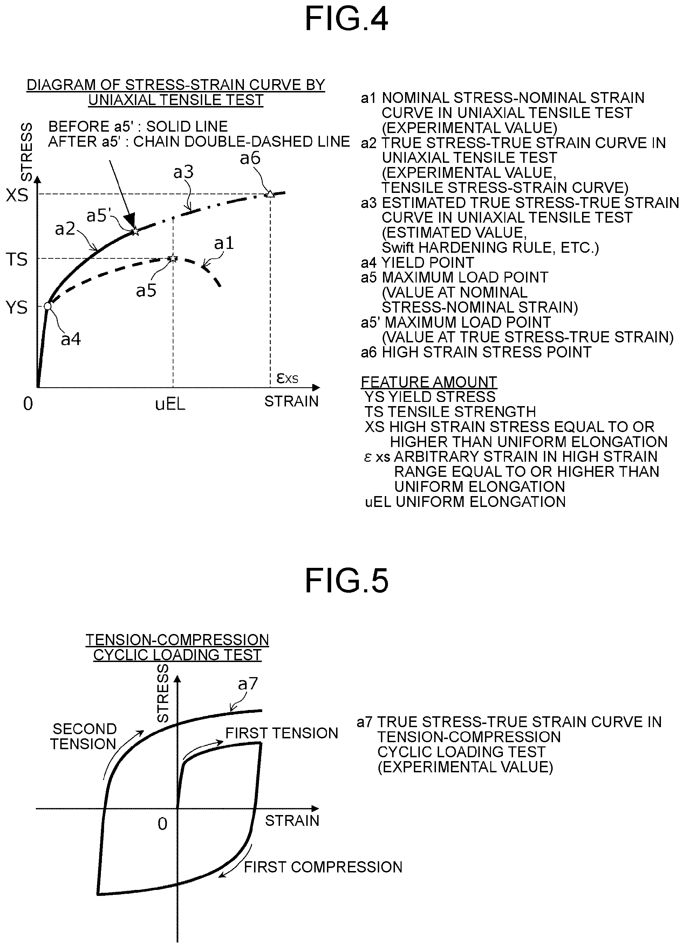

$c_i$ (i=1 to 4) for use in each of these hardening rules is a parameter, and the number of parameters for use in the above hardening rules is four at the maximum. These parameters are decided so as to minimize (fitting) a residual between a stress-strain curve under a uniaxial tensile stress obtained by the uniaxial tensile test (hereinafter, referred to as a "tensile stress-strain curve", see a2 in FIG. 4) and a tensile stress-strain curve calculated by each isotropic hardening model. At this time, the number of the parameters of the isotropic hardening model is smaller than the number of the parameters of the Yoshida-Uemori material model, and in order to decide these parameters, fitting only to the tensile stress-strain curve is required, so that the parameters of the isotropic hardening model can be easily decided.

By contrast, as shown in Table 1, there are eight parameters of the Yoshida-Uemori material model, and a possible range of each parameter is not specified. For this reason, it is necessary to adjust the parameters in a very large range when deciding the parameters of the Yoshida-Uemori material model, which causes a problem of difficulty in simultaneously obtaining an optimum value for all the parameters.

Furthermore, in order to reproduce the Bauschinger effect with high accuracy by the Yoshida-Uemori material model, it is also necessary to perform fitting on a stress-strain curve under a compression-tensile stress obtained by a tension-compression cyclic loading test (hereinafter, referred to as the "cyclic stress-strain curve", see FIG. 5). For this reason, in order to decide the parameters of the Yoshida-Uemori material model, more complicated calculation is required as compared with the case of deciding the parameters of the isotropic hardening model (c1 to c4 in Equations (A10) to (A14)).

In addition, when deciding the parameters of the Yoshida-Uemori material model, it is necessary to be able to reproduce mechanical property values such as yield stress (YS), tensile strength (TS), uniform elongation (uEL), and the like, which are basic feature values of the material. By reproducing these mechanical property values, it is possible to perform highly accurate prediction by finite element analysis such as press forming analysis or spring-back analysis of a press formed part.

For example, in a state of uniaxial tensile stress, when further deformation is applied, the tensile strength (TS) and the uniform elongation (uEL) cause necking, and the deformation concentrates on the necking part, leading to fracture. Therefore, for highly accurate press forming analysis, it is necessary to accurately reproduce timing at which the necking occurs.

As described above, it is important that a mechanical property value, which is a basic feature amount of a material, can be reproduced by a material model. However, there is a problem that it is difficult to determine whether the mechanical property value is reproduced or not only from the tensile stress-strain curve.

Therefore, the inventors have studied a method for solving the above problems. In this study, the inventors focused on correlation between the parameters of the Yoshida-Uemori material model and the tensile stress-strain curve. As a result, it has been found that a new parameter obtained by combining and converting at least two parameters among the parameters for use in the Yoshida-Uemori material model has a strong correlation with a feature amount (YS, TS, etc.) of the tensile stress-strain curve. Furthermore, it has been found that since regarding thus converted parameter, a possible range thereof can be decided from the tensile stress-strain curve, the parameter can be decided more appropriately and easily as compared with a conventional method for deciding a parameter.

The present invention has been made on the basis of the above findings, and specific configurations thereof are as follows.

[First Embodiment]

<Stress-Strain Relation Estimation Method>

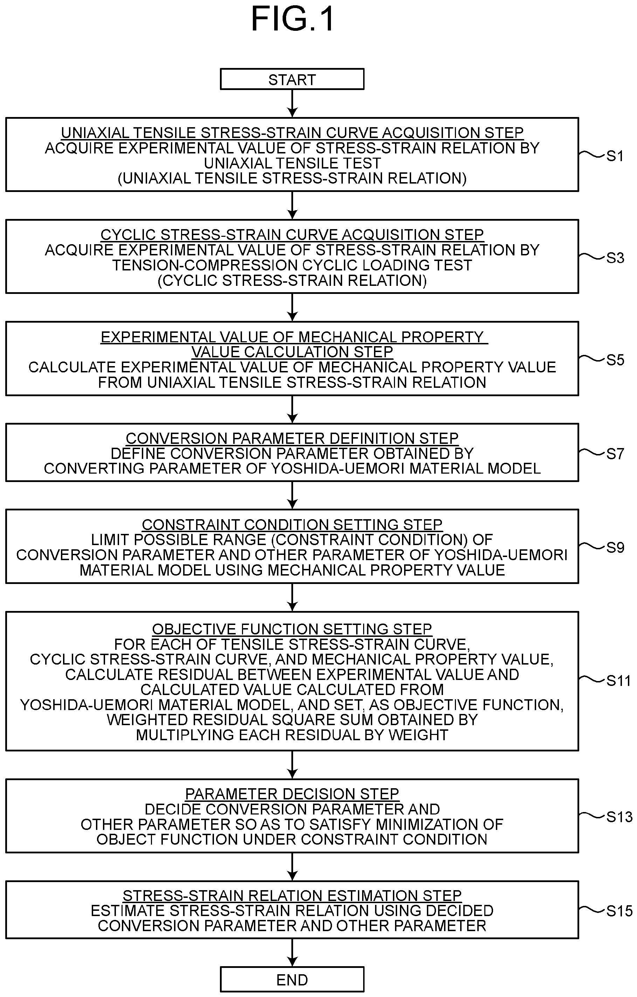

A stress-strain relation estimation method according to a first embodiment of the present invention estimates a stress-strain relation of a metal sheet by using the Yoshida-Uemori material model representing the Bauschinger effect of a metal sheet. Then, as illustrated in FIG. 1, the stress-strain relation estimation method according to the present embodiment includes a uniaxial tensile stress-strain curve acquisition step S1, a cyclic stress-strain curve acquisition step S3, an experimental value of mechanical property value calculation step S5, and a conversion parameter definition step S7. Furthermore, as illustrated in FIG. 1, the stress-strain relation estimation method according to the first embodiment includes a constraint condition setting step S9, an objective function setting step S11, a parameter decision step S13, and a stress-strain relation estimation step S15. Each of these steps will be described below.

<<Uniaxial Tensile Stress-Strain Curve Acquisition Step>>

The uniaxial tensile stress-strain curve acquisition step S1 is a step of experimentally acquiring a stress-strain curve under a uniaxial tensile stress of a metal sheet by a uniaxial tensile test using the metal sheet as a test piece.

<<Cyclic Stress-Strain Curve Acquisition Step>>

The cyclic stress-strain curve acquisition step S3 is a step of experimentally acquiring a stress-strain curve under a tension-compression cyclic stress of the metal sheet by a tension-compression cyclic loading test using the metal sheet as a test piece.

<<Experimental Value of Mechanical Property Value Calculation Step>>

The experimental value of mechanical property value calculation step S5 is a step of calculating an experimental value of a mechanical property value of the metal sheet from the stress-strain curve under the uniaxial tensile stress of the metal sheet experimentally acquired by the uniaxial tensile test. In the present embodiment, in the experimental value of mechanical property value calculation step S5, a yield stress YS, a tensile strength TS, a uniform elongation uEL, and a stress XS in a high strain range equal to or higher than the uniform elongation are acquired as the experimental values of the mechanical property values.

<<Conversion Parameter Definition Step>>

The conversion parameter definition step S7 is a step of defining a conversion parameter obtained by combining at least two parameters among parameters for use in the Yoshida-Uemori material model and converting the combined parameters.

In the first embodiment, conversion parameters BL, $\kappa$, $\eta$, and $\sigma$sat are defined by the following Equations (1) to (4).

$$BL = Y + a_0 \qquad (1)$$

$$\kappa = C_1 / C_2 \qquad (2)$$

$$\eta = b / (b + R_{sat}) \qquad (3)$$

$$\sigma_{sat} = Y + a_0 + b + R_{sat} \qquad (4)$$

The conversion parameter BL defined by Equation (1) is obtained by combining the parameters a0 and Y of the Yoshida-Uemori material model to convert the parameter a0. The conversion parameter $\kappa$ defined by Equation (2) is obtained by combining the parameters C1 and C2 of the Yoshida-Uemori material model to convert the parameter C1. The conversion parameter $\eta$ defined by Equation (3) is obtained by combining the parameters b and Rsat of the Yoshida-Uemori material model to convert the parameter b. The conversion parameter $\sigma$sat defined by Equation (4) is obtained by combining the parameters Y, a0, b, and Rsat of the Yoshida-Uemori material model to convert the parameter Rsat.

<<Constraint Condition Setting Step>>

The constraint condition setting step S9 is a step of setting a constraint condition that limits possible ranges of the conversion parameters defined in the conversion parameter definition step S7 by using the experimental value of the mechanical property value calculated in the experimental value of mechanical property value calculation step S5.

In the first embodiment, the possible range of the conversion parameter defined in the conversion parameter definition step S7 is set by a formula corresponding to the defined conversion parameter among the following Equations (5) to (8). Specifically, a possible range of the conversion parameter BL is limited by Equation (5), a possible range of the conversion parameter $\kappa$ is limited by Equation (6), a possible range of the conversion parameter $\eta$ is limited by Equation (7), and a possible range of the conversion parameter $\sigma$sat is limited by Equation (8).

$$YS \leq BL \leq XS \qquad (5)$$

$$1 \leq \kappa \leq 4 \qquad (6)$$

$$0 \leq \eta \leq 1 \qquad (7)$$

$$0.9 \times XS \leq \sigma_{sat} \leq 1.1 \times XS \qquad (8)$$

In Table 2, possible ranges of the conversion parameters set as the constraint conditions in the first embodiment and possible ranges of other parameters of the Yoshida-Uemori material model are collectively shown.

Table 2

| Parameters | Meaning of parameters | Minimum value | Maximum value |
|---|---|---|---|
| Y | (Existing) | 0 | YS |
| BL | Initial radius of bounding surface | YS | XS |
| K | Ratio of coefficient $C_1$ related to kinematic hardening rate of yield surface (at initial stage of deformation) to coefficient $C_2$ (after initial stage of deformation) | 1 | 4 |
| $C_2$ | (Existing) | 10 | 2000 |
| $\eta$ | Ratio between isotropic hardening and kinematic hardening of bounding surface | 0 | 1 |
| m | (Existing) | 0.01 | 50 |
| $\sigma_{sat}$ | Saturated stress (saturated stress) | $0.9 \times XS$ | $1.1 \times XS$ |
| h | (Existing) | 0 | 1 |

The grounds for the possible ranges of the conversion parameters BL, $\kappa$, $\eta$, and $\sigma$sat are as follows.

(a) Conversion Parameter BL

The conversion parameter BL represents the initial radius of the bounding surface, and is expressed by a sum of the radius Y of the yield surface and a radius difference a0 between the yield surface and the bounding surface as shown in the above-described Equation (1). In the Yoshida-Uemori material model, the yield surface moves inside the bounding surface and does not exceed the bounding surface. In other words, it is clear that the initial radius BL of the bounding surface is equal to or larger than YS (yield stress), which is a maximum value of the radius Y of the yield surface (YS≤BL).

In addition, the movement of the yield surface is defined according to a relative position from the bounding surface as described in the principle of the Yoshida-Uemori material model. When the center of the yield surface is close to that of the bounding surface, a hardening rate is high, and when the yield surface approaches the bounding surface, the hardening rate is low.

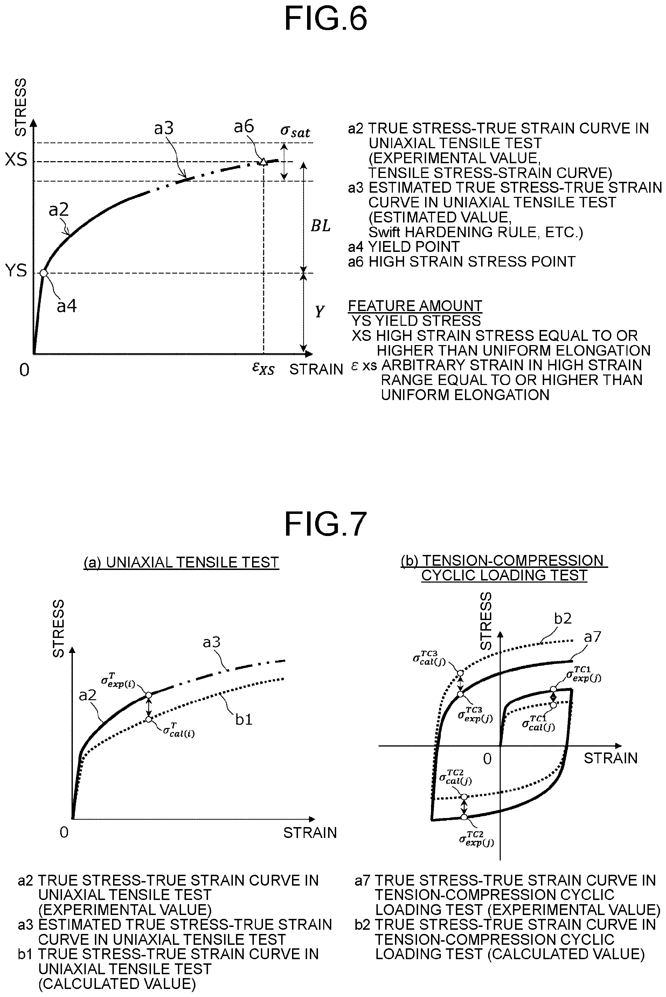

In other words, considering uniaxially tensile deformation, yield (plastic deformation) occurs at the stress Y, and immediately after the yield, the center of the yield surface is close to the center of the bounding surface, so that work hardening is greatly performed. However, when the yield surface asymptotically approaches the bounding surface and the value of the stress approaches the size of the initial radius BL of the bounding surface, the work hardening decreases, and a slope of the stress-strain curve decreases and asymptotically approaches an experimental value XS of a high strain range stress. Thus, according to the principle of the Yoshida-Uemori material model, the initial radius BL of the bounding surface is equal to or less than the experimental value XS of the high strain range stress equal to or higher than uniform elongation which is a convergence value of work hardening. For the foregoing reason, in the first embodiment, a possible range of BL is limited to YS≤BL≤XS (a range indicated by an arrow of BL in FIG. 6).

(b) Conversion Parameter $\kappa$

The conversion parameter $\kappa$ is a ratio between the parameters C1 and C2 of the Yoshida-Uemori material model as shown in the above Equation (2). Then, the parameters C1 and C2 are coefficients related to the kinematic hardening rate of the yield surface and are parameters that decide the moving rate at the relative position $\alpha^*$ of the center of the yield surface with respect to the center of the bounding surface.

A difference between C1 and C2 is that C1 is used at the initial stage of deformation, and C2 is used after that. In a case of switching from C1 to C2 at the time when a certain strain (usually equivalent plastic strain 0.005) is exceeded, when there is a large difference between the two, a discontinuous part occurs in the stress-strain curve. Although such a discontinuity of the stress-strain curve is suitable for reproducing a material exhibiting a yielding stage behaviour, otherwise there is no need to distinguish between C1 and C2. Therefore, when C1 and C2 are equal ($\kappa$=1), the conversion parameter $\kappa$ has a minimum value.

Furthermore, the parameters C1 and C2 have a large influence in reproducing a degree of the Bauschinger effect in the Yoshida-Uemori material model.

At the time of stress reversal, a difference between the yield surface and the bounding surface becomes large in a reverse loading direction, and thus the hardening rate of the yield surface is large. At this time, the larger the values of the parameters C1 and C2, the faster the yield surface moves to asymptotically approach the bounding surface. Conversely, the smaller the values of the parameters C1 and C2, the longer the time before asymptotically approaching the bounding surface, so that the stress changes gently, resulting in making it possible to express the Bauschinger effect more largely.

In a case where a tensile strength is low as in a steel sheet of 270 MPa-grade, the parameters C1 and C2 often take values of about 500 to 1000, and the values of C1 and C2 decrease as the tensile strength increases. Then, with a high-strength material of 980 MPa-grade steel sheet or higher, the parameters C1 and C2 often take a value of about 100 to 200.

On the other hand, although it is necessary to satisfy C1>C2 in order to reproduce the yielding stage behaviour, when C1 and C2 are values exceeding 1000, the difference in the stress-strain curve is small. Therefore, the value of the conversion parameter $\kappa$ representing the ratio between C1 and C2 hardly exceeds four. For the foregoing reason, in the first embodiment, the possible range of $\kappa$ is limited to $1 \leq \kappa \leq 4$.

(c) Conversion Parameter $\eta$

The conversion parameter $\eta$ represents a ratio between the kinematic hardening of the bounding surface and the isotropic hardening of the bounding surface. As shown in the above-described Equation (3), the conversion parameter $\eta$ is a ratio between the maximum value b of the amount of kinematic hardening of the bounding surface and a maximum value of combined hardening obtained by combining the kinematic hardening and the isotropic hardening of the bounding surface. The maximum value of the combined hardening is given by a sum of the maximum value b of the amount of kinematic hardening of the bounding surface and the maximum value Rsat of the amount of isotropic hardening of the bounding surface.

In proportional deformation in which the loading direction is constant in the uniaxial tensile test or the like, there is no difference between kinematic hardening and isotropic hardening, and a shape of the stress-strain curve depends only on the maximum value of the amount of hardening of the bounding surface and on the hardening rate. On the other hand, when a loading direction changes in the tension-compression cyclic loading test or the like, the kinematic hardening and the isotropic hardening of the bounding surface differ in the stress-strain curve. When the conversion parameter $\eta$ is a lower limit value ($\eta=0$), the bounding surface is isotropically hardened, and the Bauschinger effect is reduced. On the other hand, when the conversion parameter $\eta$ is an upper limit value ($\eta=1$), the bounding surface is kinematically hardened, and the Bauschinger effect increases. In other words, the parameter $\eta$ represents the degree of the Bauschinger effect. For the foregoing reason, in the first embodiment, the possible range of the conversion parameter $\eta$ is limited to $0 \leq \eta \leq 1$.

(d) Conversion Parameter $\sigma$sat

The conversion parameter $\sigma$sat represents a maximum value (saturated stress) at which a stress converges in uniaxially tensile deformation. From the principle of the Yoshida-Uemori material model, the maximum value $\sigma$sat of the stress in the uniaxially tensile deformation is expressed by a sum of an initial radius Y+a0 (=conversion parameter BL) of the bounding surface, the maximum value b of the amount of kinematic hardening of the bounding surface, and the maximum value Rsat of the amount of isotropic hardening of the bounding surface, as shown in the above Equation (4). In other words, the conversion parameter $\sigma$sat can be obtained by $\sigma$sat=Y+a0+b+Rsat.

On the other hand, in a stress-strain curve in a uniaxial tensile test, in general, a stress continues to increase as a strain increases (see FIG. 4). Therefore, a range of $\sigma$sat is decided on the basis of a stress XS (experimental value of high strain range stress, a6 in FIG. 4) at an arbitrary strain $\varepsilon$XS in a high strain range equal to or higher than the uniform elongation uEL.

While it is desirable to decide the method for deciding the arbitrary strain $\varepsilon$XS in the high strain range equal to or higher than uniform elongation in accordance with a deformation amount of a metal sheet to which the Yoshida-Uemori material model is applied, the stress converges in the high strain range in the Yoshida-Uemori material model as described above. Therefore, for example, $\varepsilon$XS=1 may be set.

However, in general, in a uniaxial tensile test, since a strain exceeds the uniform elongation uEL, and it is difficult to accurately measure a stress after occurrence of necking (a1 and a2 in FIG. 4), it is not possible to measure the stress up to the strain $\varepsilon$xs in the high strain range equal to or higher than the uniform elongation uEL. Therefore, the stress-strain curve after occurrence of necking, i.e., after the uniform elongation uEL (a3 in FIG. 4), may be estimated by an arbitrary hardening rule.

As the hardening rule, for example, the Swift hardening rule (Equation (A10), $\sigma$eq=c1 (c2+$\varepsilon$peq) c3) widely used in finite element analysis software and the like can be applied. Description will be made of a case, as an example, where a stress-strain curve after the uniform elongation uEL is estimated using the Swift hardening rule to decide a possible range of $\sigma$sat. First, parameters c1 to c3 of the Swift hardening rule are decided by fitting on the basis of the tensile stress-strain curve (a2 in FIG. 4) up to the uniform elongation uEL. Next, a stress-strain curve (a3 in FIG. 4) after the uniform elongation uEL is estimated by the Swift hardening rule to which the decided parameters c1 to c3 are applied. Then, in the estimated stress-strain curve after the uniform elongation uEL, a range of $\sigma$sat is decided on the basis of the stress XS at the arbitrary

strain $\varepsilon$XS in the high strain range equal to or higher than the uniform elongation uEL. A possible range of $\sigma$sat may be, for example, a range of $\pm$10% of XS. For the foregoing reason, in the first embodiment, a possible range of $\sigma$sat is limited to 0.9$\times$XS$\leq$$\sigma$sat$\leq$1.1$\times$XS (a range indicated by an arrow of $\sigma$sat in FIG. 6).

In the constraint condition setting step S9, not exclusively to a constraint condition on the conversion parameter, a constraint condition that limits possible ranges of other parameters of the Yoshida-Uemori material model may be further set. In the first embodiment, possible ranges of the other parameters Y, C2, m, and h are limited as shown in Table 2 described above. The grounds for the possible ranges of these parameters are as follows.

(e) Parameter Y

As described on the basis of the principle of the Yoshida-Uemori material model, the parameter Y indicates the radius of the yield surface (see FIG. 3), and when the stress exceeds Y, the material starts yielding, i.e., plastic deformation. On the other hand, the yield stress YS (see FIG. 6), which is a feature amount obtained from the stress-strain curve by the uniaxial tensile test, and a 0.2% yield strength (stress value at 0.2% plastic strain) are generally used. This is because it is very difficult to strictly determine a yield point from the stress-strain curve obtained by the experiment. From the foregoing, the parameter Y is considered to be approximately equal to or smaller than the yield stress YS.

In addition, in order to reproduce the Bauschinger effect more largely, Y is preferably smaller. For example, in the tension-compression cyclic loading test, at the time when the tensile deformation is applied to reach a certain stress $\sigma$a, the load direction is reversed to apply compressive deformation. In this case, the stress at which plastic deformation starts again in the Yoshida-Uemori material model, i.e., a re-yielding stress $\sigma$b is $\sigma$b=$\sigma$a-2Y.

When the Bauchinger effect is greater, the re-yielding stress will be higher. Specifically, while it can be seen that the Bauschinger effect tends to be larger as Y becomes smaller, it is clear that the parameter Y is a positive constant from the definition thereof. From the foregoing, in the first embodiment, the possible range of the parameter Y is preferably limited to 0<Y<YS (a range indicated by an arrow Y in FIG. 6).

(f) Parameter C2

As described above, the parameter C2 is a parameter representing a hardening rate (a parameter that decides the moving rate at the relative position $\alpha^*$ of the center of the yield surface with respect to the bounding surface center). In most cases, a steel sheet having a tensile strength of about 270 MPa-grade to 1470 MPa-grade has a C2 value of about 100 to 600. If this is not the case, a material having a yielding stage has C1 of about 1000 to 2000 as described above. Therefore, in the first embodiment, a possible range of C2 is preferably limited to 10$\leq$C2$\leq$2000.

(g) Parameter m

The parameter m is a parameter that decides a moving rate (kinematic hardening) at the bounding surface center $\beta$ and an expanding rate (isotropic hardening) of the bounding surface. The parameter m has a large influence on the stress-strain curve because it governs a hardening rate of the bounding surface by a combination of kinematic hardening (Equation (A4)) and isotropic hardening (Equation (A6)) of the bounding surface. In the uniaxial tensile stress state, a stress convergence value (saturated stress) is $\sigma$sat=Y+a0+b+Rsat (conversion parameter $\sigma$sat, Equation (4)), and the parameter m affects the time before asymptotically approaches the stress. The smaller m is, the lower the hardening rate becomes, and the more time is needed to asymptotically approach the saturated stress, so that the stress-strain curve becomes a hardening curve representing continues hardening.

In a case of a steel sheet having a tensile strength of about 270 MPa-grade to 1470 MPa-grade, the value of m is often 0.01 or more and 20 or less. Since the parameter m represents a rate similarly to the parameters C1 and C2, when m>20, the influence on the stress-strain curve is reduced, and m is rarely 50 or more. For the foregoing reason, in the first embodiment, the possible range of the parameter m is preferably limited to 0.01$\leq$m$\leq$50.

(h) Parameter h

The parameter h represents a ratio between the amount of expansion and the amount of movement of the anisotropic hardening region. The anisotropic hardening region only moves when h=0 and only expands when h=1, and the ratio can take a value therebetween (0$\leq$h$\leq$1). When h=0, the anisotropic hardening region does not expand, i.e., there is no anisotropic hardening region, and isotropic hardening of the bounding surface occurs immediately upon stress reversal. When h>0, the anisotropic hardening region expands, and thus, when the center of the bounding surface is in this region, the isotropic hardening of the bounding surface does not occur, and the hardening after stress reversal becomes small.

<<Objective Function Setting Step>>

The objective function setting step S11 is a step of setting an objective function for deciding a conversion parameter and other parameter. The objective function is set as follows.

First, a residual between a stress-strain curve experimentally acquired under the uniaxial tensile stress and a stress-strain curve under the uniaxial tensile stress calculated by the Yoshida-Uemori material model is calculated.

Next, a residual between a stress-strain curve experimentally acquired under the tension-compression cyclic stress and a stress-strain curve under the tension-compression cyclic stress calculated by the Yoshida-Uemori material model is calculated.

Furthermore, a residual between an experimental value of the mechanical property value of the metal sheet and a calculated value of the mechanical property value calculated by the Yoshida-Uemori material model is calculated.

The conversion parameters (Equations (1) to (4)) and other parameters (see Table 1) are used for calculation of the stress-strain curve under the uniaxial tensile stress, the stress-strain curve under the tension-compression cyclic stress, and the mechanical property value of the metal sheet by the Yoshida-Uemori material model.

Then, a weighted residual square sum obtained by multiplying each calculated residual by an individual weighting factor is set as an objective function.

In the first embodiment, a weighted residual square sum (WRSS) is calculated by the following Equation (9).

$$
\begin{aligned}
WRSS = \ & W_{YS}\left(\frac{YS_{cal} - YS_{exp}}{YS_{exp}}\right)^2 + W_{TS}\left(\frac{TS_{cal} - TS_{exp}}{TS_{exp}}\right)^2 \\
& + W_{uEL}\left(\frac{uEL_{cal} - uEL_{exp}}{uEL_{exp}}\right)^2 + W_{XS}\left(\frac{XS_{cal} - XS_{exp}}{XS_{exp}}\right)^2 \\
& + W_T \frac{1}{nn}\sum_{i=1}^{nn}\left(\frac{\sigma_{cal(i)}^T - \sigma_{exp(i)}^T}{TS_{exp}}\right)^2 + \sum_{k=1}^{p+1} W_{TCk}\frac{1}{mm}\sum_{j=1}^{mm}\left(\frac{\sigma_{cal(j)}^{TCk} - \sigma_{exp(j)}^{TCk}}{TS_{exp}}\right)^2
\end{aligned} \tag{9}
$$

In which,

WRSS : weighted residual square sum

$YS_{exp}$ : experimental value of yield stress

$YS_{cal}$ : calculated value of yield stress using Yoshida-Uemori material model

$W_{YS}$ : weighting factor for residual of yield stress

$TS_{exp}$ : experimental value of tensile strength

$TS_{cal}$ : calculated value of tensile strength using Yoshida-Uemori material model

$W_{TS}$ : weighting factor for residual of tensile strength

$uEL_{exp}$ : experimental value of uniform elongation

$uEL_{cal}$ : calculated value of uniform elongation using Yoshida-Uemori material model

$W_{uEL}$ : weighting factor for residual of uniform elongation

$XS_{exp}$ : experimental value of stress in high strain range equal to or higher than uniform elongation

$XS_{cal}$ : calculated value of stress in high strain range equal to or higher than uniform elongation using Yoshida - Uemori material model

$W_{XS}$ : weighting factor for residual of stress in high strain range equal to or higher than uniform elongation

$\sigma_{exp(i)}^T$ : experimental value of stress with respect to arbitrary strain on stress - strain curve under uniaxial tensile stress

$\sigma_{cal(i)}^T$ : calculated value of stress with respect to arbitrary strain on stress - strain curve under uniaxial tensile stress using Yoshida - Uemori material model

$W_T$ : weighting factor for residual of stress under uniaxial tensile stress

$\sigma_{exp(j)}^{TCk}$ : experimental value of stress with respect to arbitrary strain on stress - strain curve under tension - compression cyclic stress

$\sigma_{cal(j)}^{TCk}$ : calculated value of stress with respect to arbitrary strain on stress - strain curve under tension - compression cyclic stress using Yoshida - Uemori material model

$W_{TCk}$ : weighting factor for residual of stress under tension - compression cyclic stress

The fifth term of Equation (9) represents a residual of the tensile stress-strain curve (see FIG. 7 (a)), and the sixth term represents a residual of the cyclic stress-strain curve (see FIG. 7 (b)). p in Equation (9) represents a reversal count of the tension-compression cyclic loading test. Since the magnitude of the Bauschinger effect cannot be measured unless it is reversed at least once, the reversal count should be such that p≥1 holds. FIG. 7(b) is an example of a graph schematically illustrating a stress-strain relation under a tension-compression cyclic stress in a case where p=2.

Although an amount of strain at the start of reversal is arbitrary, when necking or buckling occurs in a material, no accurate stress can be calculated. Therefore, it is desirable to set the amount of strain equal to or less than uniform deformation as a strain to initiate reversal.

Furthermore, nn and mm in Equation (9) represent the number of divisions in a strain direction of the tensile stress-strain curve and the cyclic stress-strain curve, respectively. In order to reproduce the properties of the work hardening and the Bauschinger effect, it is desirable to increase the numbers of divisions nn and mm of the respective SS curves. In addition, since the work hardening and the Bauschinger effect largely exhibit a hardening behavior at an initial stage of deformation of the first tension or immediately after the start of the reversal, it is not necessary to divide such a range at equal intervals from the start of the deformation to the end, for example, by increasing the number of divisions of the range. In addition, WYS, WTS, WuEL, WXS, WT, and WTCk in Equation (9) are weighting factors, and individual weights may be designated for each term.

In the objective function setting step S11, a large weight may be given to the yield stress YS, the tensile strength TS, and the uniform elongation uEL, which are important as deformation properties of the metal sheet. In particular, since the stress converges in the high strain range in the Yoshida-Uemori material model used as it is without converting the parameters, a deviation from the tensile stress-strain curve extrapolated by the Swift hardening rule or the like tends to increase. In such a case, in the objective function setting step S11, by increasing a weighting factor for a residual from the stress XS in the high strain range as necessary, adjustment can be made to make the stress converge to a larger stress value.

<<Parameter Decision Step>>

The parameter decision step S13 is a step of deciding conversion parameters and other parameters of the Yoshida-Uemori material model so as to minimize an objective function under the constraint condition set in the constraint condition setting step S9.

Minimization techniques can be applied to decide conversion parameters and other parameters. Then, although an arbitrary method can be used as the minimization technique, for example, evolution type calculation based on a genetic algorithm can be applied.

As described above, the conversion parameters and other parameters can be easily identified by using the optimization techniques or the like. In addition, it is clear that the conversion parameters can be easily converted into the existing parameters of the Yoshida-Uemori material model by the definition of the conversion parameter (Equations (1) to (4)).

<<Stress-Strain Relation Estimation Step>>

The stress-strain relation estimation step S15 is a step of estimating a stress-strain relation of the metal sheet by using the conversion parameters and other parameters of the Yoshida-Uemori material model decided in the parameter decision step S13.

In order to estimate the stress-strain relation using the decided conversion parameters and other parameters by using the Yoshida-Uemori material model, inverse transformation to the original parameters may be performed on the basis of the definition formulas of the conversion parameters shown in Equations (1) to (4). However, in the stress-strain relation estimation step S15, the Yoshida-Uemori material model may be formulated using the conversion parameters defined by Equations (1) to (4). Then, the stress-strain relation may be estimated by giving the conversion parameters and other parameters decided in the parameter decision step S13.

Thus, in the stress-strain relation estimation method according to the first embodiment, parameters obtained by converting some of the parameters of the Yoshida-Uemori material model representing the Bauschinger effect of the metal sheet are defined. Then, a possible range of the conversion parameter is limited using a correlation with the mechanical property value of the metal sheet calculated from the stress-strain relation acquired under the uniaxial tensile stress. Furthermore, an objective function is defined including not only a residual from an experimental value of the stress-strain curve but also a residual from mechanical property values such as tensile strength and uniform elongation which are basic feature values of the metal sheet, and a conversion parameter and an original parameter are obtained so as to minimize the objective function.

From the foregoing, according to the stress-strain estimation method according to the first embodiment, it is possible to easily and appropriately decide the parameters of the Yoshida-Uemori material model representing the Bauschinger effect of the metal sheet while ensuring reproducibility of the basic deformation properties of the metal sheet. As a result, it is possible to accurately estimate the stress-strain relation of the metal sheet.

In the first embodiment, the four conversion parameters defined by Equations (1) to (4) are defined. However, the present invention may define at least one conversion parameter among the conversion parameters defined by Equations (1) to (4).

[Second Embodiment]

<Spring-Back Prediction Method>

A spring-back prediction method according to a second embodiment decides parameters of the Yoshida-Uemori material model and conversion parameters by the stress-strain relation estimation method according to the first embodiment described above (S1 to S13 in FIG. 1). Then, a springback of a press formed part is predicted using a stress-strain relation of a metal sheet estimated using the decided parameters and conversion parameters.

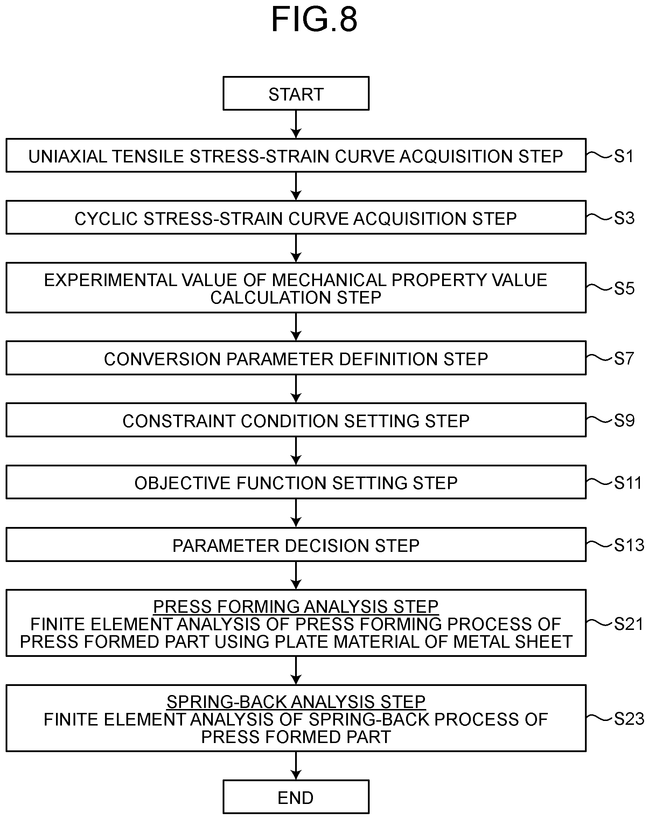

In the second embodiment, the prediction of the springback of the press formed part is performed by S1 to S13, a press forming analysis step S21, and a spring-back analysis step S23 as illustrated in FIG. 8. Since steps S1 to S13 are the same as those in the first embodiment described above, the press forming analysis step S21 and the spring-back analysis step S23 will be described below.

<<Press Forming Analysis Step>>

The press forming analysis step S21 is a step of performing finite element analysis in the process of press forming a blank of a metal sheet into a press formed part.

Commercially available finite element analysis software can be used for the finite element analysis in the press forming analysis step S21. Then, in the finite element analysis, the stress-strain relation estimated by the stress-strain estimation method according to the first embodiment is applied.

<<Spring-Back Analysis Step>>

The spring-back analysis step S23 is a step of performing finite element analysis of a springback behavior of the press formed part obtained by the finite element analysis in the press forming analysis step S21.

Commercially available finite element analysis software can be used for the finite element analysis in the spring-back analysis step S23. Then, in the finite element analysis, the stress-strain relation estimated by the stress-strain estimation method according to the first embodiment is applied.

As described in the foregoing, in the spring-back prediction method according to the second embodiment, the stress-strain relation is estimated using the parameters of the Yoshida-Uemori material model and the conversion parameters decided by the stress-strain relation estimation method according to the first embodiment. Since a springback of a press formed part is predicted using an estimated stress-strain relation, a spring-back amount of the press formed part and a shape thereof after the springback can be accurately obtained.

[Third Embodiment]

<Method for Manufacturing Press Formed Part>

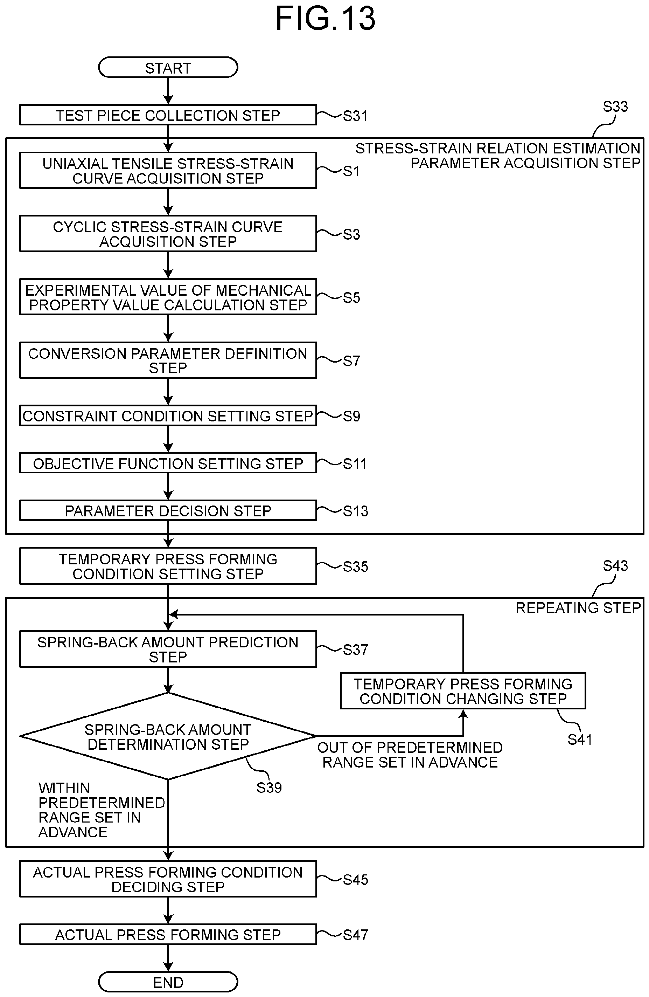

A method for manufacturing a press formed part according to a third embodiment of the present invention is to manufacture a press formed part with improved dimensional accuracy by adjusting a press forming condition so as to reduce a spring-back amount. Then, as shown in FIG. 13, the method for manufacturing a press formed part according to the present third embodiment includes a test piece collection step S31, a stress-strain relation estimation parameter acquisition step S33, and a temporary press forming condition setting step S35. The method for manufacturing a press formed part according to the present third embodiment includes a spring-back amount prediction step S37, a spring-back amount determination step S39, a temporary press forming condition changing step S41, and a repeating step S43. The method for manufacturing a press formed part according to the present third embodiment further includes an actual press forming condition deciding step S45 and an actual press forming step S47.

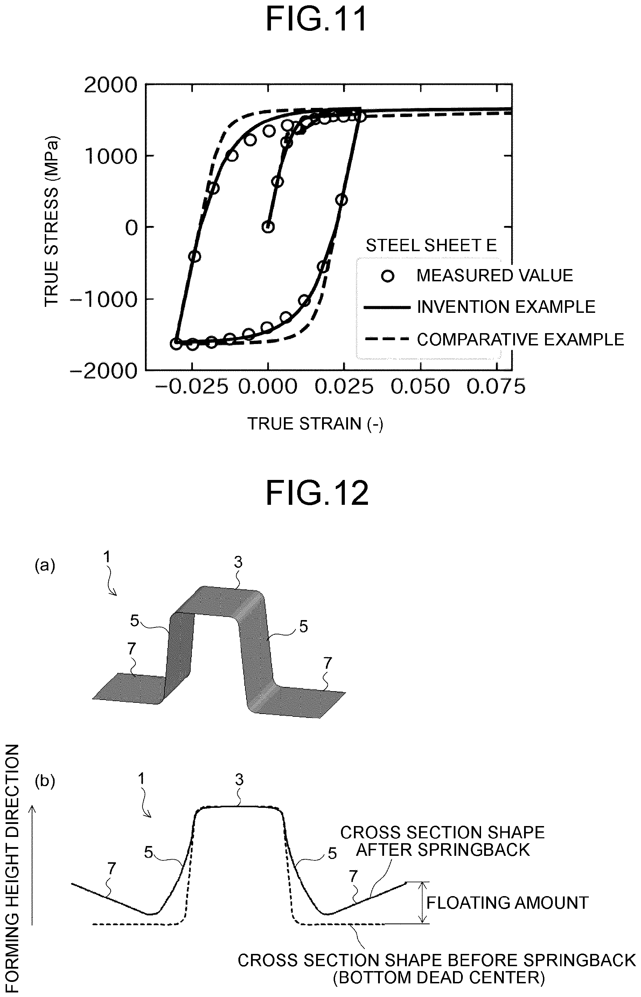

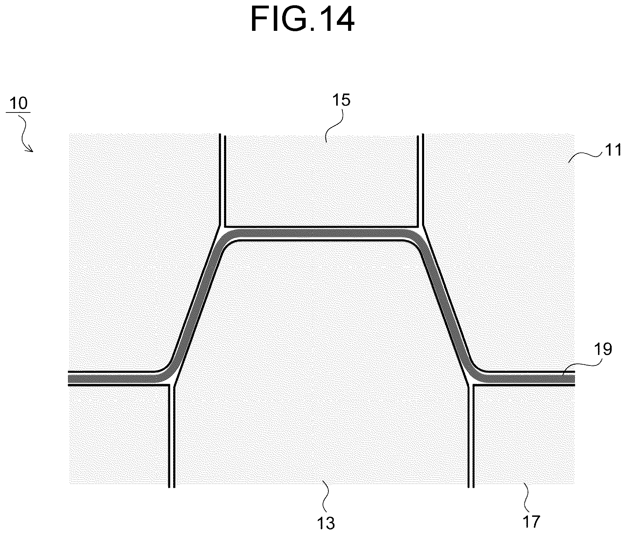

In the following, the present third embodiment is directed to a case of press forming (manufacturing), as a press formed part, a press formed part 1 having a hat-shaped cross section and including a top portion 3, a side wall portion 5, and a flange portion 7 illustrated in FIG. 12(a). Then, as shown in FIG. 14, the press formed part 1 is assumed to be press formed by a draw-bending method using a press forming die 10 including a die 11, a punch 13, a pressure pad 15, and a blank holder 17.

<<Test Piece Collection Step>>

The test piece collection step S31 is a step of collecting a test piece for use in each of the uniaxial tensile test and the tension-compression cyclic loading test from a metal sheet for use as a blank of a press formed part. The uniaxial tensile test and the tension-compression cyclic loading test are performed in each of the uniaxial tensile stress-strain curve acquisition step S1 and the cyclic stress-strain curve acquisition step S3 of the stress-strain relation estimation method according to the first embodiment described above.

<<Stress-Strain Relation Estimation Parameter Acquisition Step>>

The stress-strain relation estimation parameter acquisition step S33 is a step of obtaining conversion parameters and other parameters of the Yoshida-Uemori material model on the basis of the above-described stress-strain relation estimation method according to the first embodiment using the test piece collected in the test piece collection step S31.
In the present third embodiment, as illustrated in FIG. 13, the stress-strain relation estimation parameter acquisition step S33 obtains the conversion parameters and other parameters of the Yoshida-Uemori material model by performing steps S1 to S13 of the stress-strain relation estimation method according to the present first embodiment.

<<Temporary Press Forming Condition Setting Step>>

The temporary press forming condition setting step S35 is a step of setting temporary press forming conditions for a press formed part.
Examples of the temporary press forming condition set in the temporary press forming condition setting step S35 include a condition related to a shape of a press forming die and a condition to be set in a control panel of a press forming machine. Examples of the condition regarding the shape of the press forming die include a radius of a shoulder part of the punch 13, inclination angles of the die 11 and the punch 13 sandwiching the side wall portion 5 (see FIG. 12) with respect to a press forming direction in the press forming die 10 illustrated in FIG. 14. Examples of the condition set in the control panel of the press forming machine include a gap (clearance) between forming bottom dead centers of the die 11 and the punch 13 sandwiching the side wall portion 5 (see FIG. 14). Further examples are blank holding pressures (blank holder force) of the die 11 and the holder 17 sandwiching the flange portion 7, and the like (see FIG. 14).

<<Spring-Back Amount Prediction Step>>

In the spring-back amount prediction step S37, the press forming analysis and the spring-back analysis under the temporary press forming condition of the press formed part are performed using the conversion parameters and other parameters of the Yoshida-Uemori material model obtained in the stress-strain relation estimation parameter acquisition step S33. Then, a spring-back amount of the press formed part is predicted from the results of the press forming analysis and the spring-back analysis.
In the spring-back amount prediction step S37, the press forming analysis and the spring-back analysis are performed for a case where the metal sheet from which the test piece has been collected in the test piece collection step S31 is used as a blank. Then, for the press forming analysis and the spring-back analysis, the finite element analysis in the process of press forming the press formed part 1 and the finite element analysis of the springback behavior of the press formed part 1 obtained by that finite element analysis may be performed.
Examples of the spring-back amount predicted in the spring-back amount prediction step S37 include a floating amount of the flange portion 7 due to curl of the side wall portion 5 in the press formed part 1 after springback (see FIG. 12 (b)).

<<Spring-Back Amount Determination Step>>

The spring-back amount determination step S39 is a step of determining whether or not the spring-back amount of the press formed part predicted in the spring-back amount prediction step S37 is within a predetermined range set in advance.
The predetermined range set in advance for the spring-back amount may be appropriately set on the basis of, for example, dimensional accuracy allowed at the time of actually assembling the press formed part.

<<Temporary Press Forming Condition Changing Step>>

The temporary press forming condition changing step S41 is a step of changing a temporary press forming condition when it is determined in the spring-back amount determination step S29 that the spring-back amount of the press formed part is not within the predetermined range set in advance.

For example, as shown in FIG. 12 (b), when the floating amount of the flange portion 7 due to a curl of the side wall portion 5 after the springback is larger than a predetermined range set in advance, the shape of the press forming die 10 is changed so that the cur of the side wall portion 5 after the springback is reduced. The floating amount of the flange portion 7 is a displacement amount in a forming height direction and is an amount defined as a spring-back amount. Specifically, the shape of the press forming die 10 may be changed by reducing the radius of the shoulder part of the punch 13 or changing the inclination angles of the die 11 and the punch 13 with respect to the press forming direction so as to push down the side wall portion 5 opposite to the curl, the die 11 and the punch 13 clamping the side wall portion 5. In addition, in the temporary press forming condition changing step S41, the setting condition to be changed by the control panel of the press forming machine, such as increasing the blank holding pressures of the die 11 and the blank holder 17, may be changed as a boundary condition of the press forming analysis. Thus, in the temporary press forming condition changing step S41, the temporary press forming condition is changed (adjusted) so as to reduce the spring-back amount.

<<Repeating Step>>

The repeating step S43 is a step of repeatedly executing the spring-back amount prediction step S37 and the spring-back amount determination step S39 under the temporary press forming condition changed in the temporary press forming condition changing step S41. This repetition is performed until the spring-back amount of the press formed part is determined to be within the predetermined range set in advance in the spring-back amount determination step S39. Therefore, when it is not determined that the press formed part is within a range of the predetermined dimensional accuracy only by changing the temporary press forming condition once, the temporary press forming condition changing step S41 will be also repeated.

<<Actual Press Forming Condition Deciding Step>>

The actual press forming condition deciding step S45 is a step, in a case where it is determined in the spring-back amount determination step S39 that the spring-back amount of the press formed part is within the predetermined range set in advance, of deciding a temporary press forming condition in that case as an actual press forming condition. The actual press forming condition is a condition for actually press forming a press formed part.

In the actual press forming condition deciding step S45, an actual press forming condition may be decided as follows from a temporary press forming condition in a case where it is determined in the spring-back amount determination step S39 that the spring-back amount is within the predetermined range set in advance.

For example, in a case where the shape of the press forming die is changed as the temporary press forming condition, shape data of the press forming die (model) used for the press forming analysis is input to a CAD/CAM program linked with a numerically-controlled machine, and is converted into numerical control data (numerical control program)) for NC machining. The numerically-controlled machine machines a casting press forming die model made of expanded polystyrene or a press forming die made of steel material by a full mold casting method (evaporative pattern casting method). Then, using the numerical control data (numerical control program), casting press forming die model made of expanded polystyrene or a press forming die made of steel material is manufactured by the numerically-controlled machine. As a result, the shape of the press forming die for use in the actual press forming can be decided as the actual press forming condition. In addition, when the gap (clearance) between the forming bottom dead centers of the die 11 and the punch 13 of the press forming die 10 illustrated in FIG. 14 is changed as the temporary press forming condition, a height of a distance block may be decided according to the gap.

Furthermore, when the setting of the control panel of the press forming machine is changed as the temporary press forming condition, the changed setting of the control panel of the press forming machine is decided as the actual press forming condition. For example, when the blank holding pressures of the die 11 and the blank holder 17 are changed, a set value of an air pressure of the press forming machine or an air pressure or an oil pressure of a hydraulic die cushion (auxiliary pressure device) in the control panel can be decided as the actual press forming condition so as to obtain the changed blank holding pressure.

<<Actual Press Forming Step>>

The actual press forming step S47 is a step of press forming a press formed part using a blank of a metal sheet under the actual press forming condition decided in the actual press forming condition deciding step S45. The metal sheet to be used as a blank in the actual press forming step S47 is a metal sheet as a target from which a test piece is collected in the test piece collection step S31 and for which the conversion parameters and other parameters of the Yoshida-Uemori material model are to be obtained in the stress-strain relation estimation parameter acquisition step S33.

As described above, in the method for manufacturing a press formed part according to the third embodiment, a test piece is collected from a metal sheet for use as a blank of a press formed part to obtain parameters and the conversion parameters of the Yoshida-Uemori material model by the stress-strain relation estimation method according to the first embodiment. Then, the press forming analysis and the spring-back analysis of the press formed part are performed using the obtained parameters and conversion parameters of the Yoshida-Uemori material model to predict a spring-back amount. Furthermore, an actual press forming condition is decided so that the predicted spring-back amount of the press formed part falls within the predetermined range. By press forming the press formed part under thus decided actual press forming condition, a press formed part with improved dimensional accuracy can be manufactured.

In particular, an actual press forming condition can be decided in accordance with variations in the metal sheet for use as the blank (e.g., in a case where the metal sheet is a steel sheet, a change in a metal structure due to variations in manufacturing conditions such as a hot-rolling condition and an annealing conditions). As a result, it is also possible to suppress occurrence of a large amount of dimensional defects due to springback of press formed parts actually mass-produced. In addition, in the method for manufacturing a press formed part according to the third embodiment, even when adjustment of actual press forming conditions is required before starting mass production of actual press formed parts, the actual press forming conditions can be adjusted so that the spring-back amount is reduced.

Even when a press formed part is press formed under an actual press forming condition adjusted to reduce a spring-back amount by the method for manufacturing a press formed part according to the third embodiment, its spring-back amount may not satisfy allowable dimensional accuracy in some cases. In this case, further adjustment of the press forming conditions such as the shape of the press forming die may be repeated on the basis of the spring-back amount of the press formed part which has been press formed under the decided actual press forming conditions.

In the method according to the third embodiment, however, the actual press forming conditions are changed (adjusted) so as to reduce the spring-back amount. Therefore, the dimensional accuracy allowed for the press formed part can be satisfied without repeatedly changing the shape of the press forming die or the like as the actual press forming conditions. Therefore, the method for manufacturing a press formed part according to the third embodiment also makes it possible to greatly reduce costs and a period of preparation for production of a press formed part.

[Examples]

Since verification has been performed to confirm the actions and effects of the stress-strain relation estimation method and the spring-back prediction method according to the present invention, these will be described below.

<Estimation of Stress-Strain Relation>

With various steel sheets A to E having a tensile strength of 270 MPa-grade to 1470 MPa-grade shown in Table 3 used as metal sheets, parameters of the Yoshida-Uemori material model were decided by the method according to the first embodiment of the present invention described above.

Table 3

|  | YP/MPa | TS/MPa | uEL/% |
|---|---|---|---|
| Steel sheet A | 154 | 294 | 27 |
| Steel sheet B | 412 | 640 | 16 |
| Steel sheet C | 665 | 757 | 9 |
| Steel sheet D | 633 | 978 | 11 |
| Steel sheet E | 1360 | 1521 | 3 |

In the following, a procedure for deciding the parameters of the Yoshida-Uemori material model in Example will be described.

First, for each target steel sheet, a relation between a stress and a strain under a tensile stress up to uniform elongation was acquired by the uniaxial tensile test (a2 in FIG. 1). A relation between a stress and a strain in a high strain range after the uniform elongation was obtained by extrapolation according to the Swift hardening rule (a3 in FIG. 1). Then, the relation between a stress and a strain obtained by the uniaxial tensile test and the relation between a stress and a strain obtained by extrapolation according to the Swift hardening rule were acquired together as a tensile stress-strain curve.

Next, for each target steel sheet, a relation between a stress and a strain under a tension-compression cyclic stress was acquired by the tension-compression cyclic loading test. In the present Example, a reversal count (p) from tension to compression was set to two. First, a tensile load was applied (first tension), and the resultant was reversed to apply a compressive load (first compression). Subsequently, reversal was further made to apply a tensile load (second tension) (see FIG. 2). Then, a relation between a stress and a strain in the first tension process, the first compression process, and the second tension process was acquired as a cyclic stress-strain curve.

In the present Example, for the steel sheet A and the steel sheet B, tension was applied up to a true strain of 5% in the first tension process, compression was applied up to a true strain of -5% in the subsequent first compression process, and tension was applied up to a true strain of 5% in the second tension process in which compression was further reversed to tension. By contrast, for the steel sheet C, the steel sheet D, and the steel sheet E, strains at the start of reversal in the tension process (first tension, second tension) and the compression process (first compression) were set to 3% and -3%, respectively.

Then, each of the tensile stress-strain curve and the cyclic stress-strain curve was equally divided in the strain direction. The number of divisions nn of the tensile stress-strain curve and the number of divisions mm of the cyclic stress-strain curve were both set to 100.

Subsequently, an objective function was calculated. In the present Example, the weighted residual square sum WRSS calculated by Equation (9) shown in the first embodiment described above was used as the objective function. In addition, the respective weighting factors in Equation (9) took values shown in Table 4**.**

Table 4

| Weighting factor | Value |
|---|---|
| $W_{YS}$ | 0.3 |
| $W_{TS}$ | 1.2 |
| $W_{\mu EL}$ | 1 |
| $W_{XS}$ | 0.2 |
| $W_{TS}$ | 1.3 |
| $W_{TC1}$ | 1 |
| $W_{TC2}$ | 2.2 |
| $W_{TC3}$ | 0.3 |

Then, each parameter was decided so as to minimize the objective function. A genetic algorithm was applied to minimize the objective function, and evolution type calculation up to 100th generations was performed.

In the present embodiment, similarly to the first embodiment described above, conversion parameters given by Equations (1) to (4) among the parameters of the Yoshida-Uemori material model were defined, and the conversion parameters and other parameters were decided together to be considered as an invention example. In the invention example, the possible ranges of the conversion parameters were limited as shown in the above-described Equations (5) to (8). In addition, the possible range of the original Y was also limited to 0<Y<YS (=1350) as shown in Table 2 described above.

Furthermore, as a comparison target, original parameters directly decided by a genetic algorithm without converting the parameters of the Yoshida-Uemori material model were used as a comparative example to be compared and examined in comparison with the invention example.

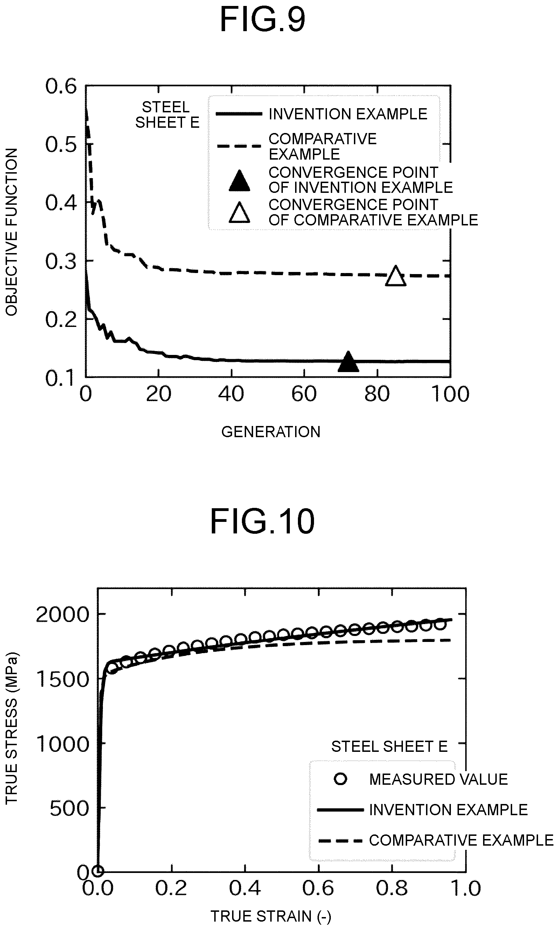

Table 5 shows a convergence value of an objective function and a convergence generation in the invention example and the comparative example. In addition, regarding the steel sheet E, a change with the generation of the objective function is illustrated in FIG. 9.

Table 5

|  | Convergence value of objective function | | Convergence generation | |
|---|---|---|---|---|
|  | Invention Example | Comparative Example | Invention Example | Comparative Example |
| Steel sheet A | 0.326 | 0.335 | 12 | 42 |
| Steel sheet B | 0.217 | 0.267 | 33 | 83 |
| Steel sheet C | 0.161 | 0.254 | 25 | 46 |
| Steel sheet D | 0.135 | 0.251 | 66 | 87 |
| Steel sheet E | 0.125 | 0.273 | 73 | 86 |

As determination of convergence, it was determined that convergence was achieved in a generation whose value was +1% or less than the value of the objective function of the 100th generation. It can be said that the smaller the value of the objective function, the higher the accuracy. On the other hand, it can be said that the earlier the convergence generation, the more efficient it is. In the invention example, as shown in Table 5 and FIG. 9, it can be seen that in any of the steel sheets, the value of the objective function was smaller than in the comparative example and convergence was achieved in an earlier generation.

Table 6 shows residuals between experimental values and calculated values of mechanical property values of the metal sheets in the invention example and the comparative example. In Table 6, a YS residual is a residual of the yield stress YS, a TS residual is a residual of the tensile strength TS, and a uEL residual is a residual of the uniform elongation.

Table 6

|  | YS residual | | TS residual | | uEL residual | |
|---|---|---|---|---|---|---|
|  | Invention Example | Comparative Example | Invention Example | Comparative Example | Invention Example | Comparative Example |
| Steel sheet A | 0.00 | 0.00 | 2.81 | 4.08 | 0.01 | 0.02 |
| Steel sheet B | 0.00 | 0.04 | 0.35 | 0.80 | 0.00 | 0.01 |
| Steel sheet C | -0.29 | 0.88 | 0.00 | 0.00 | 0.00 | 0.02 |
| Steel sheet D | -0.03 | -0.04 | 0.00 | -0.14 | -0.02 | 0.16 |
| Steel sheet E | -3.06 | -4.16 | 0.41 | 3.22 | -0.01 | 0.04 |

As shown in Table 6, it can be seen that in the invention example, the residual is smaller for any mechanical property value than in the comparative example.

Furthermore, estimation results of the tensile stress-strain curve and the cyclic stress-strain curve regarding the steel sheet E are shown in FIGS. 10 and 11. In FIG. 10, while in the comparative example, there is a deviation from a measured value in the high strain range under the uniaxial tensile stress, in the present invention, the stress-strain relation can be estimated with high accuracy up to the high strain range. Also in FIG. 11, it can be seen that the stress-strain relation after stress reversal of the metal sheet under the tension-compression cyclic stress can be estimated with high accuracy in the present invention.

Table 7 shows, with respect to a part of constraint conditions set for the steel sheet E in the invention example, ranges thereof, and values of parameters decided in the invention example and the comparative example.

Table 7

| Constraint conditions in Invention Example | Value of parameter set in Invention Example | | Value of parameter set in Comparative Example | |
|---|---|---|---|---|
| $0<Y<1350$ | 778 | ○ | 1301 | ○ |
| $1350 \leq BL \leq 1930$ | 1566 | ○ | 1618 | ○ |
| $1737 \leq \sigma_{sat} \leq 2123$ | 1954 | ○ | 1723 | × |

In the invention example, since the values of the parameters and the conversion parameters of the Yoshida-Uemori material model are decided within the range defined by the constraint conditions, the decided parameters satisfy the constraint conditions. By contrast, in the comparative example, a value of $\sigma_{sat}$ calculated from the decided parameters is out of the constraint conditions of the invention example. It is considered that in the comparative example, a deviation occurred in the calculation result of the tensile stress-strain curve because the value of $\sigma_{sat}$ indicating the characteristics of the tensile stress-strain curve was not appropriate. On the other hand, in the invention example, since the constraint conditions are set so that the characteristics of the tensile stress-strain curve can be expressed, it can be confirmed that the calculation result of the tensile stress-strain curve is well matched with an experimental result.

From the foregoing, it was shown that the stress-strain relation estimation method according to the present invention enables the parameters of the Yoshida-Uemori material model to be appropriately and easily decided, thereby enabling accurate estimation of a stress-strain relation.

<Prediction of Spring-Back Amount>

Next, a spring-back amount of the press formed part was predicted using the parameters decided in each of the above-described invention example and comparative example. Here, with the press formed part 1 having a hat-shaped cross section including the top portion 3, the side wall portion 5, and the flange portion 7 illustrated in FIG. 12 as an analysis target, the finite element analysis was performed for each of the press forming process and the spring-back process after die release after the press forming. Then, as shown in FIG. 12, a floating amount of the flange portion 7 of the press formed part 1 after springback (a displacement amount in the forming height direction) was obtained as the spring-back amount.
For each of the steel sheets A to E, results of obtaining the floating amount of the flange portion due to the springback of the press formed part are shown in Table 8.

**Table 8**

|  | Floating amount (mm) | | | Deviation from measured value (%) | |
|---|---|---|---|---|---|
|  | Measured value | Invention Example | Comparative Example | Invention Example | Comparative Example |
| Steel sheet A | 2.8 | 2.3 | 1.6 | -17 | -42 |
| Steel sheet B | 7.9 | 6.9 | 5.9 | -12 | -25 |
| Steel sheet C | 9.4 | 7.2 | 3.6 | -23 | -61 |
| Steel sheet D | 17.9 | 20.9 | 9.4 | +17 | -48 |
| Steel sheet E | 27.4 | 30.6 | 13.7 | +12 | -50 |

As shown in Table 8, it can be seen that in the invention example, the floating amount closer to the experimental result could be predicted. This shows that the method for predicting a spring-back amount of a press formed part according to the present invention enables a spring-back amount to be accurately predicted.

Industrial Applicability

According to the present invention, it is possible to provide a stress-strain relation estimation method enabling parameters of a Yoshida-Uemori material model to be appropriately decided without requiring a large number of steps and enabling a stress-strain relation of a metal sheet to be accurately estimated. Furthermore, according to the present invention, it is possible to provide a spring-back prediction method enabling accurate prediction of a springback of a press formed part by performing press forming analysis and spring-back analysis using the stress-strain relation estimated by the above method. In addition, according to the present invention, it is possible to provide a method for manufacturing a press formed part in which press forming conditions are decided so that a springback of a press formed part predicted by the above method is suppressed, and a press formed part is manufactured under the decided press forming conditions.

Reference Signs List

1    PRESS FORMED PART

3    TOP PORTION

5    SIDE WALL PORTION

7    FLANGE PORTION

10    PRESS FORMING DIE

11    DIE

13    PUNCH

15    PRESSURE PAD

17    BLANK HOLDER

**Claims**

1.  A stress-strain relation estimation method for estimating a relation between a stress and a strain of a metal sheet by using a Yoshida-Uemori material model representing a Bauschinger effect of the metal sheet, the stress-strain relation estimation method comprising:

    a uniaxial tensile stress-strain curve acquisition step of experimentally acquiring a stress-strain curve under a uniaxial tensile stress of the metal sheet by a uniaxial tensile test using the metal sheet as a test piece;
    a cyclic stress-strain curve acquisition step of experimentally acquiring a stress-strain curve under a tension-compression cyclic stress of the metal sheet by a tension-compression cyclic loading test using the metal sheet as a test piece;
    an experimental value of mechanical property value calculation step of calculating an experimental value of a mechanical property value of the metal sheet from the stress-strain curve under the uniaxial tensile stress of the metal sheet experimentally acquired by the uniaxial tensile test, the mechanical property value being a yield stress, a tensile strength, a uniform elongation, and a stress in a high strain range equal to or higher than the uniform elongation;
    a conversion parameter definition step of defining a conversion parameter obtained by combining and converting at least two parameters among parameters for use in the Yoshida-Uemori material model;
    a constraint condition setting step of setting a constraint condition that limits a possible range of the conversion parameter using the calculated experimental value of the mechanical property value;
    an objective function setting step of calculating a residual between the stress-strain curve under the uniaxial tensile stress experimentally acquired and a stress-strain curve under the uniaxial tensile stress calculated by the Yoshida-Uemori material model, a residual between the stress-strain curve under the tension-compression cyclic stress experimentally acquired and a stress-strain curve under the tension-compression cyclic stress calculated by the Yoshida-Uemori material model, and a residual between the experimental value of the mechanical property value of the metal sheet and a calculated value of the mechanical property value calculated by the Yoshida-Uemori material model, and setting a weighted residual square sum obtained by multiplying each calculated residual by an individual weighting factor as an objective function; and
    a parameter decision step of deciding the conversion parameter and other parameter of the Yoshida-Uemori material model so as to minimize the objective function under the constraint condition.

2.  The stress-strain relation estimation method according to claim 1, wherein

    in the conversion parameter definition step, one or more conversion parameters given by the following Equations (1) to (4) obtained by combining at least two of the parameters of the Yoshida-Uemori material model are defined, and
    in the constraint condition setting step, a possible range of the conversion parameter defined in the conversion parameter definition step is limited by an Equation corresponding to the defined conversion parameter among Equations (5) to (8) below,

$$BL = Y + a_0 \qquad (1)$$

$$\kappa = C_1 / C_2 \qquad (2)$$

$$\eta = b / ( b + R_{sat} ) \qquad (3)$$

$$\sigma_{sat} = Y + a_0 + b + R_{sat} \qquad (4)$$

$$YS \leqq BL \leqq XS \qquad (5)$$

$$1 \leqq \kappa \leqq 4 \qquad (6)$$

$$0 \leqq \eta \leqq 1 \qquad (7)$$

$$0.9 \times XS \leqq \sigma_{sat} \leqq 1.1 \times XS \qquad (8)$$

In which,

BL, $\kappa$, $\eta$, $\sigma_{sat}$ : conversion parameter
Y, $a_0$, $C_1$, $C_2$, b, $R_{sat}$ : parameter of Yoshida - Uemori material model
YS: experimental value of yield stress
xs : experimental value of stress in high strain range .

3. The stress-strain relation estimation method according to claim 2, wherein in the objective function setting step, the weighted residual square sum is obtained by Equation (9) below,

$$\begin{aligned}
WRSS = {} & W_{YS}\left(\frac{YS_{cal} - YS_{exp}}{YS_{exp}}\right)^2 + W_{TS}\left(\frac{TS_{cal} - TS_{exp}}{TS_{exp}}\right)^2 \\
& + W_{uEL}\left(\frac{uEL_{cal} - uEL_{exp}}{uEL_{exp}}\right)^2 + W_{XS}\left(\frac{XS_{cal} - XS_{exp}}{XS_{exp}}\right)^2 \\
& + W_T \frac{1}{nn}\sum_{i=1}^{nn}\left(\frac{\sigma_{cal(i)}^T - \sigma_{exp(i)}^T}{TS_{exp}}\right)^2 + \sum_{k=1}^{p+1} W_{TCk}\frac{1}{mm}\sum_{j=1}^{mm}\left(\frac{\sigma_{cal(j)}^{TCk} - \sigma_{exp(j)}^{TCk}}{TS_{exp}}\right)^2 \qquad (9)
\end{aligned}$$

In which,

WRSS : weighted residual square sum
$YS_{exp}$ : experimental value of yield stress
$YS_{cal}$ : calculated value of yield stress using Yoshida-Uemori material model
$W_{YS}$ : weighting factor for residual of yield stress
$TS_{exp}$ : experimental value of tensile strength
$TS_{cal}$ : calculated value of tensile strength using Yoshida-Uemori material model
$W_{TS}$ : weighting factor for residual of tensile strength
$uEL_{exp}$ : experimental value of uniform elongation
$uEL_{cal}$ : calculated value of uniform elongation using Yoshida-Uemori material model
$W_{uEL}$ : weighting factor for residual of uniform elongation
$XS_{exp}$ : experimental value of stress in high strain range equal to or higher than uniform elongation
$XS_{cal}$ : calculated value of stress in high strain range equal to or higher than uniform elongation using Yoshida - Uemori material model
$W_{XS}$ : weighting factor for residual of stress in high strain range equal to or higher than uniform elongation
$\sigma_{exp(i)}^T$ : experimental value of stress with respect to arbitrary strain on stress - strain curve under uniaxial tensile stress
$\sigma_{cal(i)}^T$ : calculated value of stress with respect to arbitrary strain on stress - strain curve under uniaxial tensile stress using Yoshida - Uemori material model
$W_T$ : weighting factor for residual of stress under uniaxial tensile stress
$\sigma_{exp(j)}^{TCk}$ : experimental value of stress with respect to arbitrary strain on stress - strain curve under tension - compression cyclic stress
$\sigma_{cal(j)}^{TCk}$ : calculated value of stress with respect to arbitrary strain on stress - strain curve under tension - compression cyclic stress using Yoshida - Uemori material model
$W_{TCk}$ : weighting factor for residual of stress under tension - compression cyclic stress

.

4. A spring-back prediction method comprising:

estimating a stress-strain relation of a metal sheet by using a parameter and a conversion parameter of the Yoshida-Uemori material model decided by the stress-strain relation estimation method according to any one of claims 1 to 3; and

performing a press forming analysis and a spring-back analysis of a press formed part made of a plate material of the metal sheet using the estimated stress-strain relation, and predicting a spring-back of the press formed part.

5. A method for manufacturing a press formed part having improved dimensional accuracy by adjusting press forming conditions so as to reduce a spring-back amount, the method for manufacturing a press formed part comprising:

a test piece collection step of collecting a test piece from a metal sheet for use as a blank of the press formed part, the test piece being for use in each of the uniaxial tensile test in the uniaxial tensile stress-strain curve acquisition step and the tension-compression cyclic loading test in the cyclic stress-strain curve acquisition step of the stress-strain relation estimation method according to any one of claims 1 to 3;

a stress-strain relation estimation parameter acquisition step of obtaining the conversion parameter and that other parameter of the Yoshida-Uemori material model on the basis of the stress-strain relation estimation method according to any one of claims 1 to 3 using the collected test piece;

a temporary press forming condition setting step of setting a temporary press forming condition of the press formed part;

a spring-back amount prediction step of performing a press forming analysis and a spring-back analysis under the temporary press forming condition of the press formed part using the blank of the metal sheet by using a stress-strain relation estimated by the conversion parameter and that other parameter of the Yoshida-Uemori material model obtained in the stress-strain relation estimation parameter acquisition step, and predicting a spring-back amount of the press formed part;

a spring-back amount determination step of determining whether or not the spring-back amount of the press formed part predicted in the spring-back amount prediction step is within a predetermined range set in advance;

a temporary press forming condition changing step of changing the temporary press forming condition when it is determined, in the spring-back amount determination step, that the spring-back amount of the press formed part is out of the predetermined range set in advance;

a repeating step of repeatedly executing the temporary press forming condition changing step, the spring-back amount prediction step, and the spring-back amount determination step until the spring-back amount of the press formed part is determined to be within the predetermined range set in advance in the spring-back amount determination step;

an actual press forming condition deciding step of deciding, in a case where the spring-back amount of the press formed part is determined to be within the predetermined range in the spring-back amount determination step, the temporary press forming condition in that case as an actual press forming condition; and

an actual press forming step of press-forming the press formed part using the blank of the metal sheet under the decided actual press forming condition.

# FIG.1

```
                    ┌─────────────┐
                    │    START    │
                    └─────────────┘
                           │
                           ▼
```

**UNIAXIAL TENSILE STRESS-STRAIN CURVE ACQUISITION STEP**
ACQUIRE EXPERIMENTAL VALUE OF STRESS-STRAIN RELATION BY
UNIAXIAL TENSILE TEST
(UNIAXIAL TENSILE STRESS-STRAIN RELATION) — S1

**CYCLIC STRESS-STRAIN CURVE ACQUISITION STEP**
ACQUIRE EXPERIMENTAL VALUE OF STRESS-STRAIN RELATION BY
TENSION-COMPRESSION CYCLIC LOADING TEST
(CYCLIC STRESS-STRAIN RELATION) — S3

**EXPERIMENTAL VALUE OF MECHANICAL PROPERTY
VALUE CALCULATION STEP**
CALCULATE EXPERIMENTAL VALUE OF MECHANICAL PROPERTY VALUE
FROM UNIAXIAL TENSILE STRESS-STRAIN RELATION — S5

**CONVERSION PARAMETER DEFINITION STEP**
DEFINE CONVERSION PARAMETER OBTAINED BY
CONVERTING PARAMETER OF YOSHIDA-UEMORI MATERIAL MODEL — S7

**CONSTRAINT CONDITION SETTING STEP**
LIMIT POSSIBLE RANGE (CONSTRAINT CONDITION) OF
CONVERSION PARAMETER AND OTHER PARAMETER OF YOSHIDA-UEMORI
MATERIAL MODEL USING MECHANICAL PROPERTY VALUE — S9

**OBJECTIVE FUNCTION SETTING STEP**
FOR EACH OF TENSILE STRESS-STRAIN CURVE,
CYCLIC STRESS-STRAIN CURVE, AND MECHANICAL PROPERTY VALUE,
CALCULATE RESIDUAL BETWEEN EXPERIMENTAL VALUE AND
CALCULATED VALUE CALCULATED FROM
YOSHIDA-UEMORI MATERIAL MODEL, AND SET, AS OBJECTIVE FUNCTION,
WEIGHTED RESIDUAL SQUARE SUM OBTAINED BY
MULTIPLYING EACH RESIDUAL BY WEIGHT — S11

**PARAMETER DECISION STEP**
DECIDE CONVERSION PARAMETER AND
OTHER PARAMETER SO AS TO SATISFY MINIMIZATION OF
OBJECT FUNCTION UNDER CONSTRAINT CONDITION — S13

**STRESS-STRAIN RELATION ESTIMATION STEP**
ESTIMATE STRESS-STRAIN RELATION USING DECIDED
CONVERSION PARAMETER AND OTHER PARAMETER — S15

```
                    ┌─────────────┐
                    │     END     │
                    └─────────────┘
```

# FIG.2

0.00

# FIG.3

# FIG.4

DIAGRAM OF STRESS-STRAIN CURVE BY
UNIAXIAL TENSILE TEST

BEFORE a5' : SOLID LINE
AFTER a5' : CHAIN DOUBLE-DASHED LINE

a1 NOMINAL STRESS-NOMINAL STRAIN
   CURVE IN UNIAXIAL TENSILE TEST
   (EXPERIMENTAL VALUE)
a2 TRUE STRESS-TRUE STRAIN CURVE IN
   UNIAXIAL TENSILE TEST
   (EXPERIMENTAL VALUE,
   TENSILE STRESS-STRAIN CURVE)
a3 ESTIMATED TRUE STRESS-TRUE STRAIN
   CURVE IN UNIAXIAL TENSILE TEST
   (ESTIMATED VALUE,
   Swift HARDENING RULE, ETC.)
a4 YIELD POINT
a5 MAXIMUM LOAD POINT
   (VALUE AT NOMINAL
   STRESS-NOMINAL STRAIN)
a5' MAXIMUM LOAD POINT
   (VALUE AT TRUE STRESS-TRUE STRAIN)
a6 HIGH STRAIN STRESS POINT

FEATURE AMOUNT
 YS YIELD STRESS
 TS TENSILE STRENGTH
 XS HIGH STRAIN STRESS EQUAL TO OR
    HIGHER THAN UNIFORM ELONGATION
 $\varepsilon$ xs ARBITRARY STRAIN IN HIGH STRAIN
    RANGE EQUAL TO OR HIGHER THAN
    UNIFORM ELONGATION
 uEL UNIFORM ELONGATION

# FIG.5

TENSION-COMPRESSION
CYCLIC LOADING TEST

a7 TRUE STRESS-TRUE STRAIN CURVE IN
   TENSION-COMPRESSION
   CYCLIC LOADING TEST
   (EXPERIMENTAL VALUE)

29

# FIG.6

a2 TRUE STRESS-TRUE STRAIN CURVE IN
   UNIAXIAL TENSILE TEST
   (EXPERIMENTAL VALUE,
   TENSILE STRESS-STRAIN CURVE)
a3 ESTIMATED TRUE STRESS-TRUE STRAIN
   CURVE IN UNIAXIAL TENSILE TEST
   (ESTIMATED VALUE,
   Swift HARDENING RULE, ETC.)
a4 YIELD POINT
a6 HIGH STRAIN STRESS POINT

<u>FEATURE AMOUNT</u>
 YS YIELD STRESS
 XS HIGH STRAIN STRESS EQUAL TO OR
    HIGHER THAN UNIFORM ELONGATION
 $\varepsilon_{xs}$ ARBITRARY STRAIN IN HIGH STRAIN
    RANGE EQUAL TO OR HIGHER THAN
    UNIFORM ELONGATION

# FIG.7

## (a) UNIAXIAL TENSILE TEST

## (b) TENSION-COMPRESSION CYCLIC LOADING TEST

a2 TRUE STRESS-TRUE STRAIN CURVE IN
   UNIAXIAL TENSILE TEST
   (EXPERIMENTAL VALUE)
a3 ESTIMATED TRUE STRESS-TRUE STRAIN
   CURVE IN UNIAXIAL TENSILE TEST
b1 TRUE STRESS-TRUE STRAIN CURVE IN
   UNIAXIAL TENSILE TEST
   (CALCULATED VALUE)

a7 TRUE STRESS-TRUE STRAIN CURVE IN
   TENSION-COMPRESSION CYCLIC
   LOADING TEST (EXPERIMENTAL VALUE)
b2 TRUE STRESS-TRUE STRAIN CURVE IN
   TENSION-COMPRESSION CYCLIC
   LOADING TEST (CALCULATED VALUE)

# FIG.8

START

↓

UNIAXIAL TENSILE STRESS-STRAIN CURVE ACQUISITION STEP  —S1

↓

CYCLIC STRESS-STRAIN CURVE ACQUISITION STEP  —S3

↓

EXPERIMENTAL VALUE OF MECHANICAL PROPERTY VALUE
CALCULATION STEP  —S5

↓

CONVERSION PARAMETER DEFINITION STEP  —S7

↓

CONSTRAINT CONDITION SETTING STEP  —S9

↓

OBJECTIVE FUNCTION SETTING STEP  —S11

↓

PARAMETER DECISION STEP  —S13

↓

PRESS FORMING ANALYSIS STEP
FINITE ELEMENT ANALYSIS OF PRESS FORMING PROCESS OF
PRESS FORMED PART USING PLATE MATERIAL OF METAL SHEET  —S21

↓

SPRING-BACK ANALYSIS STEP
FINITE ELEMENT ANALYSIS OF SPRING-BACK PROCESS OF
PRESS FORMED PART  —S23

↓

END

# FIG.9

# FIG.10

# FIG.11

# FIG.12

# FIG.13

```
                    ( START )
                        │
                        ▼
        ┌─────────────────────────────┐
        │  TEST PIECE COLLECTION STEP  ├──S31                    ⌒S33
        └─────────────────────────────┘
  ┌──────────────────────────────────────────────────────────────────────┐
  │                                      STRESS-STRAIN RELATION ESTIMATION │
  │    ┌─────────────────────────────┐   PARAMETER ACQUISITION STEP        │
  │    │ UNIAXIAL TENSILE STRESS-STRAIN├──S1                               │
  │    │  CURVE ACQUISITION STEP      │                                    │
  │    └─────────────────────────────┘                                    │
  │                   │                                                    │
  │                   ▼                                                    │
  │    ┌─────────────────────────────┐                                    │
  │    │   CYCLIC STRESS-STRAIN CURVE  ├──S3                               │
  │    │     ACQUISITION STEP         │                                    │
  │    └─────────────────────────────┘                                    │
  │                   │                                                    │
  │                   ▼                                                    │
  │    ┌─────────────────────────────┐                                    │
  │    │EXPERIMENTAL VALUE OF MECHANICAL├─S5                              │
  │    │PROPERTY VALUE CALCULATION STEP │                                  │
  │    └─────────────────────────────┘                                    │
  │                   │                                                    │
  │                   ▼                                                    │
  │    ┌─────────────────────────────┐                                    │
  │    │ CONVERSION PARAMETER DEFINITION├─S7                              │
  │    │           STEP               │                                    │
  │    └─────────────────────────────┘                                    │
  │                   │                                                    │
  │                   ▼                                                    │
  │    ┌─────────────────────────────┐                                    │
  │    │CONSTRAINT CONDITION SETTING STEP├─S9                            │
  │    └─────────────────────────────┘                                    │
  │                   │                                                    │
  │                   ▼                                                    │
  │    ┌─────────────────────────────┐                                    │
  │    │OBJECTIVE FUNCTION SETTING STEP├──S11                             │
  │    └─────────────────────────────┘                                    │
  │                   │                                                    │
  │                   ▼                                                    │
  │    ┌─────────────────────────────┐                                    │
  │    │   PARAMETER DECISION STEP    ├──S13                              │
  │    └─────────────────────────────┘                                    │
  └──────────────────────────────────────────────────────────────────────┘
                        │
                        ▼
        ┌─────────────────────────────┐
        │  TEMPORARY PRESS FORMING     ├──S35                    ⌒S43
        │  CONDITION SETTING STEP      │
        └─────────────────────────────┘
  ┌──────────────────────────────────────────────────────────────────────┐
  │                                                      REPEATING STEP    │
  │    ┌─────────────────────────────┐                                    │
  │    │  SPRING-BACK AMOUNT PREDICTION├──S37                             │
  │    │           STEP               │    ┌──────────────────────────┐   │
  │    └─────────────────────────────┘    │ TEMPORARY PRESS FORMING  │   │
  │                   │                    │ CONDITION CHANGING STEP  │   │
  │                   ▼                    └──────────────────────────┘   │
  │             ◇◇◇◇◇◇◇◇◇◇◇                              S41             │
  │          ◇  SPRING-BACK AMOUNT ◇                                      │
  │         ◇ DETERMINATION STEP    ◇──OUT OF PREDETERMINED               │
  │          ◇◇◇◇◇◇◇◇◇◇◇◇◇◇◇◇◇       RANGE SET IN ADVANCE                 │
  │    WITHIN           S39                                               │
  │    PREDETERMINED                                                      │
  │    RANGE SET IN                                                       │
  │    ADVANCE                                                            │
  └──────────────────────────────────────────────────────────────────────┘
                        │
                        ▼
        ┌─────────────────────────────┐
        │ ACTUAL PRESS FORMING CONDITION├──S45                            
        │       DECIDING STEP          │
        └─────────────────────────────┘
                        │
                        ▼
        ┌─────────────────────────────┐
        │  ACTUAL PRESS FORMING STEP   ├──S47
        └─────────────────────────────┘
                        │
                        ▼
                    (  END  )
```

# FIG.14

EP 4 553 483 A1

**INTERNATIONAL SEARCH REPORT**

International application No.

**PCT/JP2023/029208**

| A. | CLASSIFICATION OF SUBJECT MATTER |
|---|---|

*G01N 3/08*(2006.01)i; *B21D 22/00*(2006.01)i; *G01N 3/32*(2006.01)i; *G06F 30/23*(2020.01)i; *G06F 113/22*(2020.01)n; *G06F 119/14*(2020.01)n
FI:    G01N3/08; G01N3/32 J; B21D22/00; G06F30/23; G06F119:14; G06F113:22

According to International Patent Classification (IPC) or to both national classification and IPC

| B. | FIELDS SEARCHED |
|---|---|

Minimum documentation searched (classification system followed by classification symbols)

G01N3/08; B21D22/00; G01N3/32; G06F30/23; G06F113/22; G06F119/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 濱崎洋　ほか, ステンレス／アルミニウム積層板の移動硬化則パラメータ同定, 日本機械学会　第22回設計工学・システム部門講演会, 26 September 2012, vol. 22, session ID: 3401, DOI: https://doi.org/10.1299/jsmedsd.2012.22_3401-1_, non-official translation (HAMASAKI, Hiroshi et al. Kinematic hardening parameter identification for stainless/aluminum laminated plates. JSME 22nd Design and Systems Conference.)<br>entire text | 1-5 |
| A | 吉田総仁　ほか, 大ひずみ繰返し塑性変形挙動を記述する構成式, 日本機械学会論文集, 25 March 2002, vol. 68, no. 667, pp. 415-421, DOI: https://doi.org/10.1299/kikaia.68.415 (YOSHIDA, Fusahito et al. A Constitutive Equation for Description of Large-Strain Cyclic Plasticity. Proceedings of the JSME.)<br>entire text | 1-5 |
| A | YOHSHIDA, Fusahito et al., A model of large-strain cyclic plasticity describing the Bauschinger effect and workhardening stagnation, International Journal of Plasticity, October 2002, vol. 18, Issues 5-6, 661-686, DOI:https://doi.org/10.1016/50749-6419(01)00050-X<br>entire text | 1-5 |

☑ Further documents are listed in the continuation of Box C.        ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **13 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/029208**

| C. | DOCUMENTS CONSIDERED TO BE RELEVANT | |
|---|---|---|
| Category* | Citation of document, with indication, where appropriate, of the relevant passages | Relevant to claim No. |
| A | JP 2014-178168 A (JFE STEEL CORP.) 25 September 2014 (2014-09-25)<br>entire text | 1-5 |
| A | JP 2013-054001 A (JFE STEEL CORP.) 21 March 2013 (2013-03-21)<br>entire text | 1-5 |

Form PCT/ISA/210 (second sheet) (January 2015)

EP 4 553 483 A1

**INTERNATIONAL SEARCH REPORT**
Information on patent family members

International application No.

**PCT/JP2023/029208**

| Patent document cited in search report | | | Publication date (day/month/year) | Patent family member(s) | | | Publication date (day/month/year) |
|---|---|---|---|---|---|---|---|
| JP | 2014-178168 | A | 25 September 2014 | US | 2015/0370936 | A1 | |
| | | | | entire text | | | |
| JP | 2013-054001 | A | 21 March 2013 | (Family: none) | | | |

Form PCT/ISA/210 (patent family annex) (January 2015)

38

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008142774 A